# EUROPEAN PATENT APPLICATION

(11) **EP 3 650 480 A1**
(43) Date of publication of application: **13.05.2020**
(21) Application number: 18827462.5
(22) Date of filing: 02.07.2018
(51) Int. Cl.: C08G 18/08, C08G 18/48, C08G 18/66, C09K 9/02, G02B 1/04, G02C 7/10

(54) **POLYMERIZABLE COMPOSITION FOR OPTICAL MATERIALS AND MOLDED BODY**

(30) Priority: 03.07.2017 JP 2017130119; 25.05.2018 JP 2018100565
(71) Applicant: Mitsui Chemicals, Inc., Minato-ku Tokyo 105-7122 (JP)
(72) Inventor: KASORI, Yuuki, Omuta-shi Fukuoka 836-8610 (JP); KAWAGUCHI, Masaru, Omuta-shi Fukuoka 836-8610 (JP); KAWATO, Nobuo, Omuta-shi Fukuoka 836-8610 (JP)
(74) Representative: Mewburn Ellis LLP
(86) International application number: PCT/JP2018/025015
(87) International publication number: WO 2019/009230

(57) **Abstract**

A polymerizable composition for an optical material according to the present invention includes (A) phosphite triester represented by Formula (1), (D) a photochromic compound, (E) a polyisocyanate compound, and (F) a difunctional or higher functional active hydrogen compound.

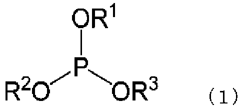

## Description

### TECHNICAL FIELD

The present invention relates to a polymerizable composition for an optical material including a photochromic compound, an optical material obtained from the composition, and a molded product such as a plastic lens.

### BACKGROUND ART

Plastic lenses are lighter and harder to break than inorganic lenses, and thus are rapidly spreading to optical elements such as spectacle lenses and camera lenses. Recently, a plastic lens for spectacles having a photochromic performance has been developed.

Among them, a spectacle lens obtained from poly(thio)urethane is attracting attention because the lens has a high refractive index and excellent physical properties such as strength.

Patent Document 1 discloses a lens comprised of a composition including a photochromic compound and a poly (meth) acrylate compound, and Patent Documents 2 and 3 disclose a lens provided with a coating layer including a photochromic compound on a surface of a thiourethane-based plastic lens. Patent Document 4 discloses a compound having photochromic characteristics.

Patent Document 5 discloses a polymerizable composition for an optical material including at least one isocyanate compound selected from an aliphatic isocyanate compound and an alicyclic isocyanate compound, a difunctional or higher functional active hydrogen compound, and a photochromic compound.

Patent Document 6 discloses using a predetermined alcohol such that the photochromic compound can easily undergo isomerization reaction for color development and decoloration, to formed an appropriate space in a matrix and improve a light control response performance.

Patent Documents 7 and 8 disclose that poly (thio) urethane light control materials have poor light resistance in some cases, but the light resistance is improved by a predetermined method.

Patent Document 9 discloses a polymerizable composition for an optical material including a polymerizable monomer having a (meth)acryl group, a predetermined photochromic compound, and an ultraviolet absorbing agent. Patent Document 10 discloses a polymerizable composition for an optical material including a compound including an allyloxycarbonyl group, a polymerization initiator, and a photochromic compound.

Patent Documents 11 to 14 disclose uses of triphenyl phosphite or the like as an additive such as a storage stabilizer.

### RELATED DOCUMENT

### PATENT DOCUMENT

[Patent Document 1] JPH08-272036
[Patent Document 2] JP2005-23238
[Patent Document 3] JP2008-30439
[Patent Document 4] JP2011-144181
[Patent Document 5] WO2014/002844
[Patent Document 6] WO2015/115648
[Patent Document 7] WO2017/047744
[Patent Document 8] WO2017/047745
[Patent Document 9] WO2017/047742
[Patent Document 10] WO2017/047743
[Patent Document 11] JPH05-295358
[Patent Document 12] JP2008-143872
[Patent Document 13] WO2010/067489
[Patent Document 14] US5221721

### NON-PATENT DOCUMENT

[Non-Patent Document 1] P. Alexandridis, T.A. Hatton/Colloids Surfaces A: Physicochem. Eng. Aspects 96 (1995) 1-46

### SUMMARY OF THE INVENTION

### TECHNICAL PROBLEM

In the light control material comprised of a poly (thio) urethane resin, the present inventors of the present invention have found that there is a case where a cured light control material is remarkably colored red due to the quality of the polyisocyanate compound, which is an essential monomer component, and the color deteriorates and is not stable. In this case, the light control material cannot be applied to a spectacle lens material that requires particularly high transparency.

Generally, in a case where the quality of the polyisocyanate compound is deteriorated, a phenomenon that the obtained plastic lens becomes cloudy or a phenomenon that the obtained plastic lens is colored yellow is often observed. However, since the present phenomenon found by the present inventors is a phenomenon that cloudiness of the obtained plastic lens is not observed, but red coloration is observed, it is not considered that the phenomenon is merely caused by a deterioration of the quality of the polyisocyanate compound.

Further, this phenomenon of red coloration is not observed in a poly (meth) acrylate resin and a polyallyl carbonate resin disclosed in Patent Documents 9 and 10,.

From the above, it is presumed that this phenomenon occurred due to impurities in the polyisocyanate compound.

In view of the above, the present inventors have diligently conducted research to develop a polymerizable composition that can provide a light control material in which, regardless of quality of the polyisocyanate compound, the red coloration is suppressed, a good initial color is stably obtained, and a excellent light control performance is exhibited.

### SOLUTION TO PROBLEM

The present inventors have found that the above problems can be solved by containing both of a specific phosphorous acid triester and a photochromic compound, so as to conceive the present invention.

The present invention can be provided below.
[1] A polymerizable composition for an optical material including:
   (A) phosphite triester represented by Formula (1); 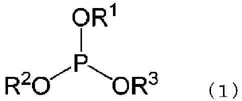 wherein, in Formula (1), R¹, R², and R³ each represent an aliphatic or aromatic hydrocarbon group having 1 to 18 carbon atoms which optionally include a hetero atom, R¹, R², and R³ may be identical to or different from each other, and R¹, R², and R³ can be bonded to each other to form a ring structure that optionally include a hetero atom,
   (D) a photochromic compound,
   (E) a polyisocyanate compound, and
   (F) a difunctional or higher functional active hydrogen compound.
[2] The polymerizable composition for an optical material according to [1], further including:
   (C) at least one kind of alcohol compound selected from a compound represented by Formula (3a) and a compound represented by Formula (3b), 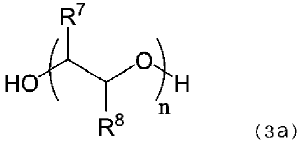 wherein, in Formula (3a), R⁷ and R⁸ each represent a hydrogen atom, a methyl group, and an ethyl group, and at least one thereof is a hydrogen atom, R⁷ and R⁸ may be identical to or different from each other, and n represents an integer of 30 to 500, 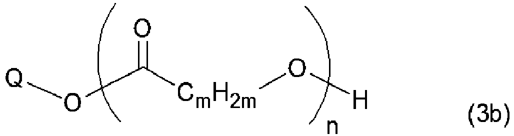 wherein, in Formula (3b), Q represents a divalent group derived from diol, or a trivalent to 30-valent group derived from polyol having at least three primary alcohol groups, and m represents an integer of 3 to 10, and n represents an integer of 2 to 30.
[3] The polymerizable composition for an optical material according to [1] or [2], further including (B) acidic phosphate ester represented by Formula (2). 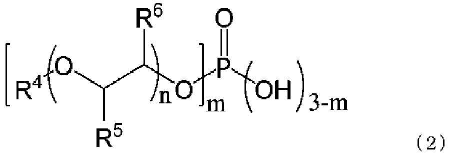 wherein, in Formula (2), m represents an integer of 1 or 2, n represents an integer of 0 to 18, R⁴ represents an alkyl group having 1 to 20 carbon atoms, R⁵ and R⁶ each independently represent a hydrogen atom, a methyl group, or an ethyl group.
[4] The polymerizable composition for an optical material according to any one of [1] to [3], in which a content of the phosphite triester (A) is 0.01 % by weight to 0.5 % by weight with respect to 100 % by weight of the polymerizable composition for an optical material.
[5] The polymerizable composition for an optical material according to any one of [1] to [4], in which the phosphite triester (A) is a compound including an aromatic ring.
[6] The polymerizable composition for an optical material according to any one of [1] to [5], in which the phosphite triester (A) is at least one selected from triphenyl phosphite, trisnonylphenyl phosphite, tricresyl phosphite, diphenyl(2-ethylhexyl)phosphite, diphenylisodecyl phosphite, diphenyltridecyl phosphite, tetraphenyl dipropylene glycol diphosphite, and tris(2,4-dibutylphenyl) phosphite.
[7] The polymerizable composition for an optical material according to any one of [1] to [6], in which the phosphite triester (A) is triphenyl phosphite.
[8] The polymerizable composition for an optical material according to [3], in which in the acidic phosphate ester (B), n represents an integer of 4 or less, and R⁴ represents an alkyl group having 1 to 12 carbon atoms.
[9] The polymerizable composition for an optical material according to [2], in which the alcohol compound (C) is a compound represented by Formula (4a). 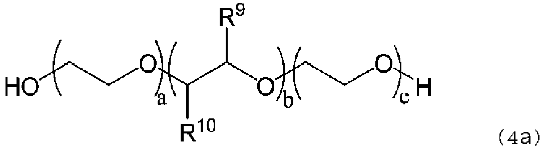 wherein, in Formula (4a), R⁹ and R¹⁰ each represent a hydrogen atom, a methyl group, and an ethyl group, and at least one thereof is a hydrogen atom, R⁹ and R¹⁰ may be identical to or different from each other, and sum of a and c is an integer of 2 to 400, and b is an integer of 1 to 100.
[10] The polymerizable composition for an optical material according to [9], in which a number average molecular weight of the alcohol compound (C) is 1,000 to 15,000.
[11] The polymerizable composition for an optical material according to [9] or [10], a number average molecular weight of the alcohol compound (C) is 1,500 to 7,500.
[12] The polymerizable composition for an optical material according to any one of [1] to [11], in which the photochromic compound (D) is at least one selected from compounds represented by Formulae (5) and (6). 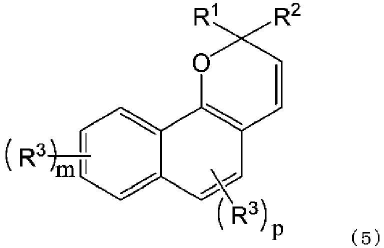 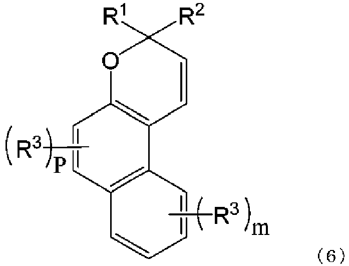
   wherein, in Formulae (5) and (6), R¹ and R² may be identical to or different from each other, and each represent
   hydrogen;
   a linear or branched alkyl group having 1 to 12 carbon atoms;
   a cycloalkyl group having 3 to 12 carbon atoms;
   an aryl group having 6 to 24 carbon atoms or a heteroaryl group having 4 to 24 carbon atoms, which is substituted or unsubstituted; and
   an aralkyl or heteroaralkyl group (a linear or branched alkyl group having 1 to 4 carbon atoms is substituted with the aryl group or heteroaryl group),
   the substituent of the substituted aryl group having 6 to 24 carbon atoms or the substituted heteroaryl group having 4 to 24 carbon atoms is at least one selected from a halogen atom, a hydroxy group, a linear or branched alkyl group having 1 to 12 carbon atoms, a linear or branched alkoxy group having 1 to 12 carbon atoms, a linear or branched haloalkyl group having 1 to 12 carbon atoms which is substituted with at least one halogen atom, a linear or branched haloalkoxy group having 1 to 12 carbon atoms, which is substituted with at least one halogen atom, a phenoxy group or a naphthoxy group which is substituted with at least one linear or branched alkyl group or alkoxy group having 1 to 12 carbon atoms, a linear or branched alkenyl group having 2 to 12 carbon atoms, a -NH₂ group, a -NHR group, a -N(R)₂ group (R represents a linear or branched alkyl group having 1 to 6 carbon atoms, and in a case where there are two R's, the two R's may be identical to or different from each other), a methacryloyl group, or an acryloyl group,
   R³'s may be identical to or different from each other, and independently represent a halogen atom;
   a linear or branched alkyl group having 1 to 12 carbon atoms;
   a cycloalkyl group having 3 to 12 carbon atoms;
   a linear or branched alkoxy group having 1 to 12 carbon atoms;
   a linear or branched haloalkyl group having 1 to 12 carbon atoms substituted with at least one halogen atom, a halocycloalkyl group having 3 to 12 carbon atoms substituted with at least one halogen atom, and a linear or branched haloalkoxy group having 1 to 12 carbon atoms substituted with at least one halogen atom;
   an aryl group having 6 to 24 carbon atoms or a heteroaryl group having 4 to 24 carbon atoms, which is substituted or unsubstituted (as a substituent, having at least one substituent selected from a halogen atom, a hydroxy group, a linear or branched alkyl group having 1 to 12 carbon atoms, a linear or branched alkoxy group having 1 to 12 carbon atoms, a linear or branched haloalkyl group having 1 to 12 carbon atoms which is substituted with at least one halogen atom, a linear or branched haloalkoxy group having 1 to 12 carbon atoms, which is substituted with at least one halogen atom, a phenoxy group or a naphthoxy group which is substituted with at least one linear or branched alkyl group or alkoxy group having 1 to 12 carbon atoms, a linear or branched alkenyl group having 2 to 12 carbon atoms, and an amino group);
   an aralkyl or heteroaralkyl group (a linear or branched alkyl group having 1 to 4 carbon atoms is substituted with the aryl group or heteroaryl group);
   a substituted or unsubstituted phenoxy or naphthoxy group (as a substituent, having at least one substituent selected from a linear or branched alkyl group or alkoxy group having 1 to 6 carbon atoms);
   -NH₂; -NHR; -CONH₂; or
   -CONHR
   (R is a linear or branched alkyl group having 1 to 6 carbon atoms); and
   -OCOR or -COOR (here, R is a linear or branched alkyl group having 1 to 6 carbon atoms, a cycloalkyl group having 3 to 6 carbon atoms, or a phenyl group substituted with at least one substituent of a substituted aryl or substituted heteroaryl group described in R¹ and R² or an unsubstituted phenyl group),
   at least two adjacent R³'s may be bonded to each other and form one or more aromatic or non-aromatic ring groups including carbon atoms to which R3 are bonded, the aromatic or non-aromatic ring groups includes one ring or two annelated rings that optionally include a hetero atom selected from the group consisting of oxygen, sulfur, and nitrogen,
   m is an integer of 0 to 4, and p is an integer of 0 to 2.
[13] The polymerizable composition for an optical material according to any one of [1] to [12], in which the photochromic compound (D) is a compound represented by Formula (7); 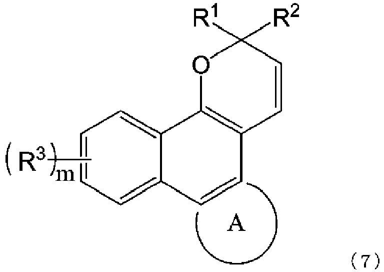 wherein, in Formula (7), R¹, R², R³, and m are the same as those in Formula (5), and A represents an annelated ring of Formulae (A1) to (A5); 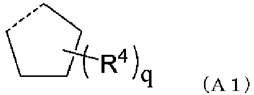 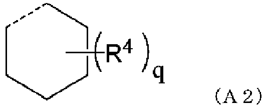 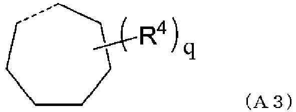 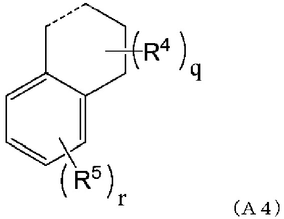 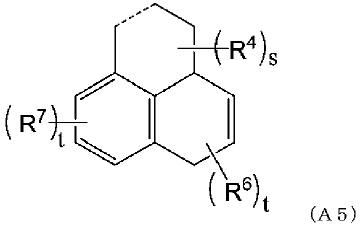
   wherein, in these annelated rings (A1) to (A5), dotted lines represent a bond between a carbon C5 and a carbon C6 in a naphthopyran ring of Formula (7), the a bond of the annelated ring (A4) or (A5) is bonded to the carbon C5 or the carbon C6 in the naphthopyran ring of Formula (7),
   R⁴'s may be identical to or different from each other, and independently represent OH, or a linear or branched alkyl group or alkoxy group having 1 to 6 carbon atoms, or two R⁴'s form carbonyl (CO),
   R⁵, R⁶ and R⁷ are independently a halogen atom;
   a linear or branched alkyl group having 1 to 12 carbon atoms;
   a linear or branched haloalkyl group having 1 to 6 carbon atoms substituted by at least one halogen atom;
   a cycloalkyl group having 3 to 12 carbon atoms;
   a linear or branched alkoxy group having 1 to 6 carbon atoms;
   a substituted or unsubstituted phenyl or benzyl group (as a substituent, having at least one of the substituents exemplified above in the definition of the R¹ and R² groups, in a case where the R¹ and R² groups of Formula (7) independently correspond to aryl or heteroaryl groups);
   -NH₂; and
   -NHR (here, R is a linear or branched alkyl group having 1 to 6 carbon atoms);
   a substituted or unsubstituted phenoxy or naphthoxy group (as a substituent, having a linear or branched alkyl group or alkoxy group having at least 1 to 6 carbon atoms); and
   -COR;
   -COOR; or
   -CONHR (here, R represents a linear or branched alkyl group having 1 to 6 carbon atoms, a cycloalkyl group having 3 to 6 carbon atoms, or a substituted or unsubstituted phenyl or benzyl group (as a substituent, having at least one of the substituents exemplified above in the definition of the R¹ and R² groups, in a case where the R¹ and R² groups Formula (7) of independently correspond to aryl or heteroaryl groups))
   q is an integer of 0 to 6, r is an integer of 0 to 4, s is an integer of 0 to 2, and t is an integer of 0 to 3, and
   in a case where A represents (A4), q is an integer of 0 to 2, r is an integer of 0 to 4, and in a case where A represents (A2), and q is an integer of 0 to 2.
[14] The polymerizable composition for an optical material according to any one of [1] to [13], in which the photochromic compound (D) is a compound represented by Formula (a) or (b);

   PC-L-Chain (a)

   PC-L-Chain-L'-PC' (b)

   wherein PC and PC' represent any one of Formulae (c) to (f), and PC and PC' may be identical to or different from each other, 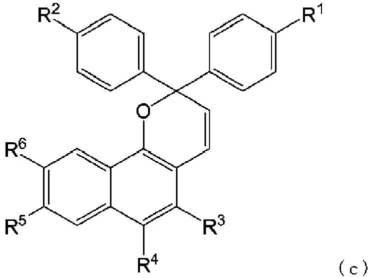 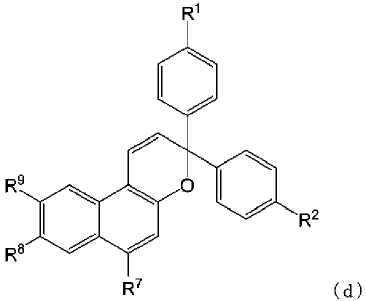 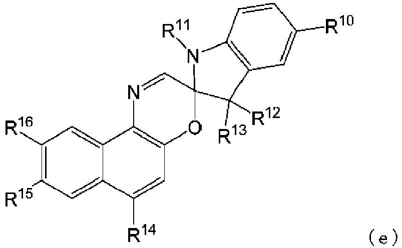 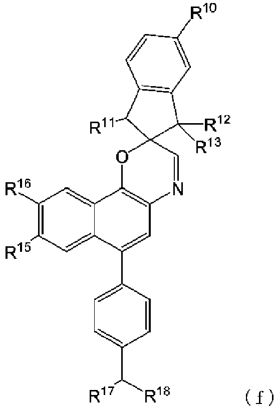 wherein, in Formulae (c) to (f), R¹ to R¹⁸ each represent hydrogen, a halogen atom, a carboxyl group, an acetyl group, a formyl group, a C1 to C20 aliphatic group which optionally be substituted, a C3 to C20 alicyclic group which optionally be substituted, or a C6 to C20 aromatic organic group which optionally be substituted, and may be identical to or different from each other, the aliphatic group, the alicyclic group, or the aromatic organic group may include an oxygen atom or a nitrogen atom, any one group included in the compounds represented by the Formulae (c) to (f) is bonded to L or L' which is a divalent organic group, L and L' each represent a divalent organic group including at least one group selected from an oxyethylene chain, an oxypropylene chain, a (thio) ester group, and a (thio) amide group, and chain represents a monovalent or divalent organic group including at least one group selected from a polysiloxane chain and a polyoxyalkylene chain.
[15] The polymerizable composition for an optical material according to any one of [1] to [14], in which the polyisocyanate compound (E) is at least one selected from hexamethylene diisocyanate, pentamethylene diisocyanate, m-xylylene diisocyanate, p-xylylene diisocyanate, isophorone diisocyanate, bis(isocyanatomethyl) cyclohexane, dicyclohexylmethane diisocyanate, 2,5-bis(isocyanatomethyl)bicyclo-[2.2.1]-heptane, 2,6-bis(isocyanatomethyl)bicyclo-[2.2.1]-heptane, tolylene diisocyanate, phenylene diisocyanate, and diphenylmethane diisocyanate.
[16] The polymerizable composition for an optical material according to according to any one of [1] to [15], in which the active hydrogen compound (F) is at least one selected from a polyol compound, a polythiol compound, and a thiol compound having a hydroxy group.
[17] The polymerizable composition for an optical material according to any one of [1] to [16], in which the active hydrogen compound (F) is a trifunctional or higher functional active hydrogen compound.
[18] The polymerizable composition for an optical material according to any one of [1] to [17], in which the active hydrogen compound (F) is at least one selected from glycerin, pentaerythritol tetrakis(2-mercaptoacetate), pentaerythritol tetrakis(3-mercaptopropionate), 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 1,1,3,3-tetrakis(mercaptomethylthio) propane, and trimethylolpropane tris(3-mercaptopropionate).
[19] A molded product comprised of a cured product of the polymerizable composition for an optical material according to any one of [1] to [18].
[20] An optical material comprised of the molded product according to [19].
[21] A plastic lens comprised of the molded product according to [19].
[22] A plastic polarized lens including: a polarizing film; and
   a substrate layer comprised of the molded product according to [19], which is formed on at least over surface of the polarizing film.
[23] A master batch for the polymerizable composition for an optical material according to any one of [1] to [18], including: a phosphite triester (A); a photochromic compound (D); and a polyisocyanate compound (E).
[24] The master batch according to [23], including: 0.1 % by weight to 2 % by weight of the phosphite triester (A).
[25] A process of producing the master batch for the polymerizable composition for an optical material according [23] or [24], including: mixing a phosphite triester (A) and a polyisocyanate compound (E), and
   mixing a photochromic compound (D) with the mixture liquid obtained in the above step.
[26] A process of producing a polymerizable composition for an optical material, including:
   mixing
   (A) phosphite triester represented by Formula (1), 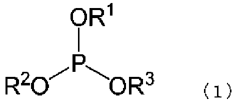 wherein, in Formula (1), R¹, R², and R³ each represent an aliphatic or aromatic hydrocarbon group having 1 to 18 carbon atoms which optionally include a hetero atom, R¹, R², and R³ may be identical to or different from each other, and R¹, R², and R³ can be bonded to each other to form a ring structure that optionally include a hetero atom.
   (D) a photochromic compound,
   (E) a polyisocyanate compound, and
   (F) a difunctional or higher functional active hydrogen compound.
[27] The process of producing a polymerizable composition for an optical material according to [26], in which the mixing components of (A), (D), (E), and (F) includes
   preparing a master batch by the process according to [25]; and
   mixing the remaining component of (E) constituting a polymerizable composition for an optical material and the active hydrogen compound (F) with the master batch.
[28] The process of producing a polymerizable composition for an optical material according to [26] or [27], in which the mixing components of (A), (D), (E), and (F) (here, excluding an alcohol compound represented by Formulae (3a) and (3b)) includes
   mixing (C) at least one kind of alcohol compound selected from a compound represented by Formula (3a) and a compound represented by Formula (3b), 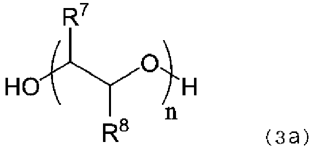 wherein, in Formula (3a), R⁷ and R⁸ each represent a hydrogen atom, a methyl group, and an ethyl group, and at least one thereof is a hydrogen atom, R⁷ and R⁸ may be identical to or different from each other, and n represents an integer of 30 to 500, 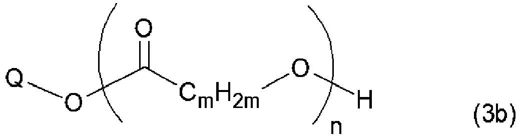 wherein, in Formula (3b), Q represents a divalent group derived from diol, or a trivalent to 30-valent group derived from polyol having at least three primary alcohol groups, and m represents an integer of 3 to 10, and n represents an integer of 2 to 30.
[29] The process of producing a polymerizable composition for an optical material according to any one of [26] to [28], in which the mixing components of (A), (D), (E), and (F) includes
   mixing (B) acidic phosphate ester represented by Formula (2). 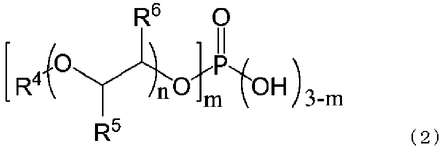 wherein, in Formula (2), m represents an integer of 1 or 2, n represents an integer of 0 to 18, R⁴ represents an alkyl group having 1 to 20 carbon atoms, R⁵ and R⁶ each independently represent a hydrogen atom, a methyl group, or an ethyl group.
[30] A process of producing a plastic lens, including: preparing a polymerizable composition for an optical material by the process according to any one of [26] to [29]; and
   performing cast polymerization on the polymerizable composition for an optical material in a mold to form a lens substrate.
[31] A process of producing a plastic polarized lens, including:
   preparing a polymerizable composition for an optical material by the process according to any one of [26] to [29];
   fixing a polarizing film to a lens casting mold in a state of being separated from the mold;
   injecting a polymerizable composition for an optical material to at least one of the cavities formed between the polarizing film and the mold; and
   polymerizing and curing the polymerizable composition for an optical material to laminate a substrate layer over at least one surface of the polarizing film.

### ADVANTAGEOUS EFFECTS OF INVENTION

According to the polymerizable composition for an optical material of the present invention, it is possible to obtain a polyurethane-based optical material or a polythiourethane-based optical material including a photochromic compound in which, regardless of quality of the polyisocyanate compound, a good initial color can be stably obtained, and an excellent light control performance is exhibited.

### DESCRIPTION OF EMBODIMENTS

The polymerizable composition for an optical material of the present invention is described with reference to the following embodiment.

The polymerizable composition for an optical material of the present embodiment includes
(A) phosphite triester represented by Formula (1),
(D) a photochromic compound,
(E) a polyisocyanate compound, and
(F) a difunctional or higher functional active hydrogen compound.

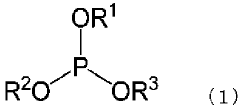

In Formula (1), R¹, R², and R³ each represents an aliphatic or aromatic hydrocarbon group having 1 to 18 carbon atoms that optionally include a hetero atom. R¹, R², and R³ may be identical to or different from each other. R¹, R², and R³ can be bonded to each other to form a ring structure that optionally include a hetero atom.

Examples of the ring structure include an alicyclic group having 3 to 18 carbon atoms, an aromatic group having 5 to 18 carbon atoms, a heterocyclic group having 3 to 18 carbon atoms, or a spiro ring group having 7 to 18 carbon atoms, which optionally be substituted.

The polymerizable composition for an optical material of the present embodiment has a phenomenon of red coloration, which is presumed to be caused by a reaction between an impurity in an isocyanate compound and a photochromic compound, can be suppressed, and the initial color can be improved by adding phosphite (A).

Hereinafter, each component is described.

### [(A) Phosphite triester]

Phosphite triester (A) is represented by Formula (1).

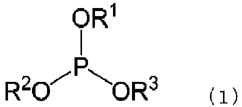

In Formula (1), R¹, R², and R³ each represent an aliphatic or aromatic hydrocarbon group having 1 to 18 carbon atoms which optionally include a hetero atom. R¹, R², and R³ may be identical to or different from each other. R¹, R², and R³ can be bonded to each other to form a ring structure that optionally include a hetero atom.

Examples of the phosphite triester (A) include aliphatic phosphite such as triethyl phosphite, tris (2-ethylhexyl) phosphite, triisodecyl phosphite, trilauryl phosphite, triisotridecyl phosphite, tristearyl phosphite, trioleyl phosphite, bis(isodecyl) pentaerythritol diphosphite, bis(tridecyl) pentaerythritol diphosphite, and distearyl pentaerythritol diphosphite; and
aromatic phosphite such as triphenyl phosphite, trisnonylphenyl phosphite, tricresyl phosphite, diphenyl (2-ethylhexyl) phosphite, diphenylisodecyl phosphite, diphenyltridecyl phosphite, tetraphenyldipropylene glycol diphosphite, tris(2,4-dibutylphenyl) phosphite. As the phosphite triester (A), at least one selected from these can be used.

As the phosphite triester (A), at least one selected from tris(2-ethylhexyl) phosphite, triisodecyl phosphite, trilauryl phosphite, triisotridecyl phosphite, tristearyl phosphite, trioleyl phosphite, triphenyl phosphite, trisnonylphenyl phosphite, tricresyl phosphite, diphenyl (2-ethylhexyl) phosphite, diphenylisodecyl phosphite, diphenyltridecyl phosphite, tetraphenyldipropylene glycol diphosphite, tris(2,4-dibutylphenyl) phosphite is preferable,
at least one compound including an aromatic ring such as triphenyl phosphite, trisnonylphenyl phosphite, tricresyl phosphite, diphenyl (2-ethylhexyl) phosphite, diphenylisodecyl phosphite, diphenyltridecyl phosphite, tetraphenyldipropylene glycol diphosphite, and tris(2,4-dibutylphenyl) phosphite is more preferable. In the present embodiment, triphenyl phosphite is particularly preferable.

Such phosphite triester (A) may be used singly or two or more kinds thereof may be used in a mixture.

### [(D) photochromic compound]

In the present embodiment, the photochromic compound is not particularly limited, and any one of well-known compounds in the related art which can be used for a photochromic lens can be suitably selected and used. For example, one or more of a spiropyran-based compound, a spirooxazine-based compound, a fulgide-based compound, a naphthopyran-based compound, and a bisimidazole compound can be used depending on desired coloration.

Examples of the spiropyran-based compound include each substituted product in which indole rings and benzene rings of indolinospirobenzopyran are substituted with halogen, methyl, ethyl, methylene, ethylene, hydroxyl groups, or the like, each substituted product in which indole rings and naphthalene rings of indolinospironaphthopyran are substituted with halogen, methyl, ethyl, methylene, ethylene, hydroxyl groups, or the like, each substituted product in which indole rings of indolinospiroquinolinopyran are substituted with halogen, methyl, ethyl, methylene, ethylene, hydroxyl groups, or the like, and each substituted product in which indole rings of indolinospiropyridopyran are substituted with halogen, methyl, ethyl, methylene, ethylene, hydroxyl groups, or the like.

Examples of the spirooxazine-based compound include each substituted product in which indole rings and benzene rings of indolinospirobenzoxazine are substituted with halogen, methyl, ethyl, methylene, ethylene, hydroxyl groups, or the like, each substituted product in which indole rings and naphthalene rings of indolinospironaphthoxazine are substituted with halogen, methyl, ethyl, methylene, ethylene, hydroxyl groups, or the like, each substituted product in which indole rings of indolinospirophenanthroxazine are substituted with halogen, methyl, ethyl, methylene, ethylene, hydroxyl groups, or the like, each substituted product in which indole rings of indolinospiroquinolinoxazine are substituted with halogen, methyl, ethyl, methylene, ethylene, hydroxyl groups, or the like, and each substituted product in which piperidine rings and naphthalene rings of piperidinospironaphthoxazine are substituted with halogen, methyl, ethyl, methylene, ethylene, hydroxyl groups, or the like.

Examples of the fulgide-based compound include N-cyanomethyl-6,7-dihydro-4-methyl-2-phenylspiro(5,6-benzo[b]thi ophenedicarboximide-7,2'-tricyclo[3.3.1.1^{3,7}]decane), N-cyanomethyl-6,7-dihydro-2-(p-methoxyphenyl)-4-methylspiro(5,6-benzo[b]thiophenedicarboximide-7,2'-tricyclo[3.3.1.1^{3,7}]decane), 6,7-dihydro-N-methoxycarbonylmethyl-4-methyl-2-phenylspiro(5,6-b enzo[b]thiophenedicarboximide-7,2'-tricyclo[3.3.1.1^{3,7}]decane), 6,7-dihydro-4-methyl-2-(p-methylphenyl)-N-nitromethylspiro(5,6-b enzo[b]thiophenedicarboximide-7,2'-tricyclo[3.3.1.1^{3,7}]decane), N-cyanomethyl-6,7-dihydro-4-cyclopropyl-3-methylspiro(5,6-benzo[ b]thiophenedicarboximide-7,2'-tricyclo[3.3.1.1^{3,7}]decane), N-cyanomethyl-6,7-dihydro-4-cyclopropylspiro(5,6-benzo[b]thiophe nedicarboximide-7,2'-tricyclo[3.3.1.1^{3,7}]decane), and N-cyanomethyl-6,7-dihydro-2-(p-methoxyphenyl)-4-cyclopropylspiro (5,6-benzo[b]thiophenedicarboximide-7,2'-tricyclo[3.3.1.1^{3,7}]deca ne).

Examples of the naphthopyran compounds include spiro(norbornane-2,2'-[2H]benzo[h]chromene), spiro(bicyclo[3.3.1]nonane-9,2'-[2H]benzo[h]chromene), 7'-methoxyspiro(bicyclo[3.3.1]nonane-9,2'-[2H]benzo[h]chromene), 7'-methoxyspiro(norbornane-2,2'-[2H]benzo[f]chromene), 2,2-dimethyl-7-octoxy[2H]benzo[h]chromene, spiro(2-bicyclo[3.3.1]nonene-9,2'-[2H]benzo[h]chromene), spiro(2-bicyclo[3.3.1]nonene-9,2'-[2H]benzo[f]chromene), 6-morpholino-3,3-bis(3-fluoro-4-methoxyphenyl)-3H-benzo[f]chrome ne, 5-isopropyl-2,2-diphenyl-2H-benzo(h)chromene, and compounds represented by Formula (5) or (6).

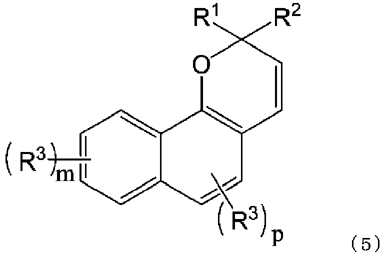

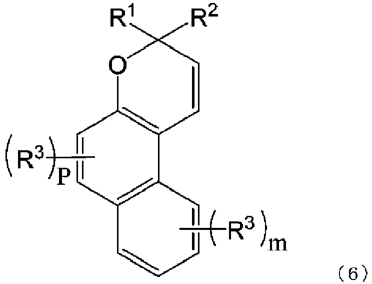

In Formulae (5) and (6), R¹ and R² may be identical to or different from each other, and independently represent hydrogen;
a linear or branched alkyl group having 1 to 12 carbon atoms;
a cycloalkyl group having 3 to 12 carbon atoms;
an aryl group having 6 to 24 carbon atoms or a heteroaryl group having 4 to 24 carbon atoms, which is substituted or unsubstituted; and
an aralkyl or heteroaralkyl group (a linear or branched alkyl group having 1 to 4 carbon atoms is substituted with the aryl group or heteroaryl group.)

The substituent of the substituted aryl group having 6 to 24 carbon atoms or the substituted heteroaryl group having 4 to 24 carbon atoms is at least one selected from a halogen atom, a hydroxy group, a linear or branched alkyl group having 1 to 12 carbon atoms, a linear or branched alkoxy group having 1 to 12 carbon atoms, a linear or branched haloalkyl group having 1 to 12 carbon atoms which is substituted with at least one halogen atom, a linear or branched haloalkoxy group having 1 to 12 carbon atoms, which is substituted with at least one halogen atom, a phenoxy group or a naphthoxy group which is substituted with at least one linear or branched alkyl group or alkoxy group having 1 to 12 carbon atoms, a linear or branched alkenyl group having 2 to 12 carbon atoms, a -NH₂ group, a -NHR group, a -N(R)₂ group (R represents a linear or branched alkyl group having 1 to 6 carbon atoms. In a case where there are two R's, the two R's may be identical to or different from each other.), a methacryloyl group, or an acryloyl group.

R³'s may be identical to or different from each other, and independently represent a halogen atom;
a linear or branched alkyl group having 1 to 12 carbon atoms;
a cycloalkyl group having 3 to 12 carbon atoms;
a linear or branched alkoxy group having 1 to 12 carbon atoms;
a linear or branched haloalkyl group having 1 to 12 carbon atoms substituted with at least one halogen atom, a halocycloalkyl group having 3 to 12 carbon atoms substituted with at least one halogen atom, and a linear or branched haloalkoxy group having 1 to 12 carbon atoms substituted with at least one halogen atom;
an aryl group having 6 to 24 carbon atoms or a heteroaryl group having 4 to 24 carbon atoms, which is substituted or unsubstituted (as a substituent, having at least one substituent selected from a halogen atom, a hydroxy group, a linear or branched alkyl group having 1 to 12 carbon atoms, a linear or branched alkoxy group having 1 to 12 carbon atoms, a linear or branched haloalkyl group having 1 to 12 carbon atoms which is substituted with at least one halogen atom, a linear or branched haloalkoxy group having 1 to 12 carbon atoms, which is substituted with at least one halogen atom, a phenoxy group or a naphthoxy group which is substituted with at least one linear or branched alkyl group or alkoxy group having 1 to 12 carbon atoms, a linear or branched alkenyl group having 2 to 12 carbon atoms, and an amino group.);
an aralkyl or heteroaralkyl group (a linear or branched alkyl group having 1 to 4 carbon atoms is substituted with the aryl group or heteroaryl group.);
a substituted or unsubstituted phenoxy or naphthoxy group (as a substituent, having at least one substituent selected from a linear or branched alkyl group or alkoxy group having 1 to 6 carbon atoms.);
-NH₂; -NHR; -CONH₂; or
-CONHR
(R is a linear or branched alkyl group having 1 to 6 carbon atoms.); and
-OCOR or -COOR (here, R is a linear or branched alkyl group having 1 to 6 carbon atoms, a cycloalkyl group having 3 to 6 carbon atoms, or a phenyl group substituted with at least one substituent of a substituted aryl or substituted heteroaryl group or an unsubstituted phenyl group in R¹, R².)

At least two adjacent R³'s are bonded to each other and include carbon atoms to which R³ are bonded, to form one or more aromatic or non-aromatic rings. The aromatic or non-aromatic ring includes one ring or two annelated rings that optionally include a hetero atom selected from the group consisting of oxygen, sulfur, and nitrogen.

m is an integer of 0 to 4. p is an integer of 0 to 2.

Examples of the naphthopyran-based compound include compounds in which photochromic dye molecules are added to at least one terminal of each of a polysiloxane oligomer, polyalkylene oxide, and polyalkyl ester disclosed in WO2013/78086, WO2012/149599, WO2010/020770, and WO2009/146509, or compounds in which the structure represented by Formula (5) or (6) is bonded by a linking group, and one molecule includes two or more naphthopyran rings.

Preferable examples of the naphthopyran-based compound represented by Formula (5) include a compound represented by Formula (7) .

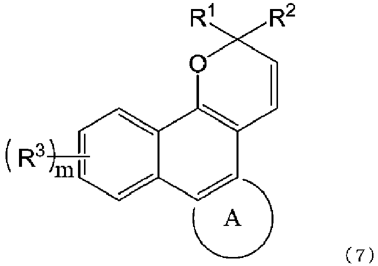

R¹, R², and R³, and m are the same as those in Formula (5), and A represents an annelated ring of Formulae (A1) to (A5).

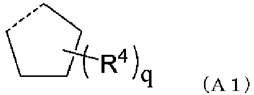

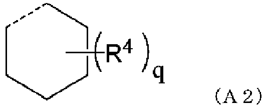

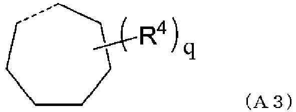

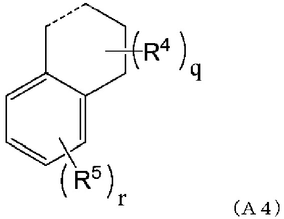

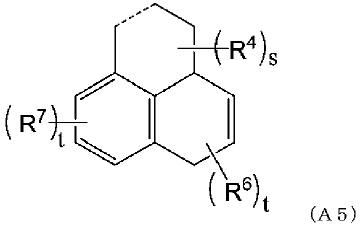

In these annelated rings (A1) to (A5), dotted lines represent a bond between a carbon C5 and a carbon C6 in the naphthopyran ring of Formula (7). The α bond of the annelated ring (A4) or (A5) is bonded to the carbon C5 or the carbon C6 in the naphthopyran ring of Formula (7).

R⁴'s are identical to or different from each other, and independently represent OH, a linear or branched alkyl group or alkoxy group having 1 to 6 carbon atoms, and two R⁴'s form carbonyl (CO).

R⁵, R⁶ and R⁷ are independently a halogen atom (preferably fluorine, chlorine, or bromine);
a linear or branched alkyl group having 1 to 12 carbon atoms (preferably a linear or branched alkyl group having 1 to 6 carbon atoms);
a linear or branched haloalkyl group having 1 to 6 carbon atoms (preferably a fluoroalkyl group) substituted by at least one halogen atom;
a cycloalkyl group having 3 to 12 carbon atoms;
a linear or branched alkoxy group having 1 to 6 carbon atoms;
a substituted or unsubstituted phenyl or benzyl group (as a substituent, having at least one of the substituents exemplified above in the definition of the R¹ and R² groups, in a case where the R¹ and R² groups of Formula (7) independently correspond to aryl or heteroaryl groups.);
-NH₂; and
-NHR (here, R is a linear or branched alkyl group having 1 to 6 carbon atoms.);
a substituted or unsubstituted phenoxy or naphthoxy group (as a substituent, having a linear or branched alkyl group or alkoxy group having at least 1 to 6 carbon atoms.);
-COR;
-COOR; or
-CONHR (here, R represents a linear or branched alkyl group having 1 to 6 carbon atoms, a cycloalkyl group having 3 to 6 carbon atoms, or a substituted or unsubstituted phenyl or benzyl group (as a substituent, having at least one of the substituents exemplified above in the definition of the R¹ and R² groups, in a case where the R¹ and R² groups Formula (7) of independently correspond to aryl or heteroaryl groups.).)
q is an integer of 0 to 6, r is an integer of 0 to 4, s is an integer of 0 to 2, and t is an integer of 0 to 3.

In a case where A represents (A4), q is an integer of 0 to 2, r is an integer of 0 to 4, and in a case where A represents (A2), q is an integer of 0 to 2.

The photochromic compound of Formula (7) is combined with a discoloration reaction rate applied to the required application, and has high colorability even at 40°C. Easily achievable colors range from orange to blue.

In the present embodiment, the photochromic compound of Formula (7) include at least one kind selected from the group consisting of a compound represented by Formula (7) in which A = (A1), a compound represented by Formula (7) in which A = (A2), a compound represented by Formula (7) in which A = (A3), a compound represented by Formula (7) in which A = (A4), and a compound represented by Formula (7) in which A = (A5).

In the present embodiment, a compound represented by Formula (8) can be preferably used as the compound represented by Formula (7) .

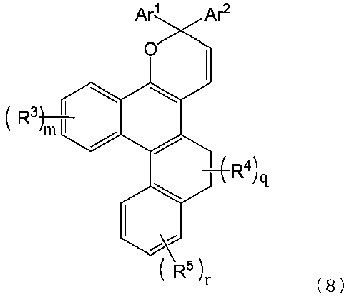

Ar¹ and Ar² are aromatic groups, may be identical to or different from each other, and each represent a benzene ring or thiophene ring, which optionally be substituted. Examples of the substituent of the benzene ring or thiophene ring include a linear or branched alkyl group having 1 to 10 carbon atoms, a linear or branched alkoxy group having 1 to 10 carbon atoms, and a linear or branched alkyl mono-substituted (or di- substituted) amino group having 1 to 6 carbon atoms. R³, R⁴, R⁵, m, q, and r are as defined above.

As the compound represented by Formula (7), a compound represented by Formula (9) can be more preferably used.

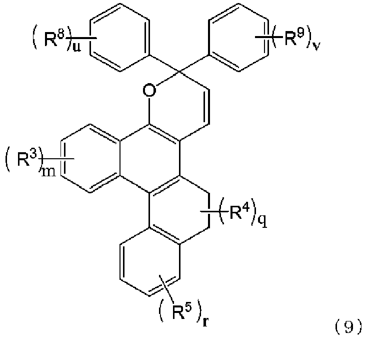

In Formula (9), R⁸, R⁹ may be identical to or different from each other, and represent a linear or branched alkyl group having 1 to 10 carbon atoms, a linear or branched alkoxy group having 1 to 10 carbon atoms, and a linear or branched allyl mono-substituted (or di-substituted) amino group having 1 to 6 carbon atoms. In a case where m is 2, adjacent two R³ are bonded to each other to form a ring structure including carbon atoms to which R³ are bonded. u and v each are an integer of 0 to 4. The ring structure is a substituted or unsubstituted aryl group having 6 to 24 carbon atoms or a substituted or unsubstituted heteroaryl group having 3 to 24 carbon atoms.

R³, R⁴, R⁵, m, q, and r are as defined above.

Specific examples of the compound represented by Formula (9) include a compound represented by Formula (10) or (11). In the present embodiment, compounds represented by Formulae (10) and (11) are preferable.

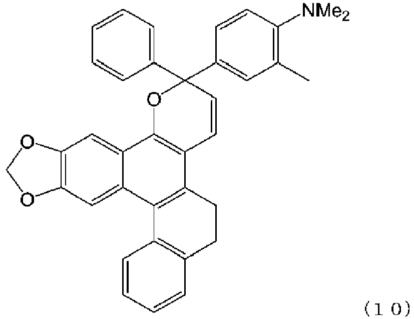

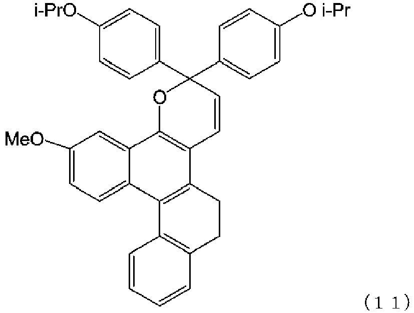

The compounds represented by Formulae (5) and (6), which are photochromic compounds, can be synthesized by a known method. For example, it can be synthesized by the method described in PCT Japanese Translation Patent Publication No. 2004-500319.

Further, specific examples of the naphthopyran-based compound represented by Formula (5) include a compound represented by Formula (12) as a preferable example.

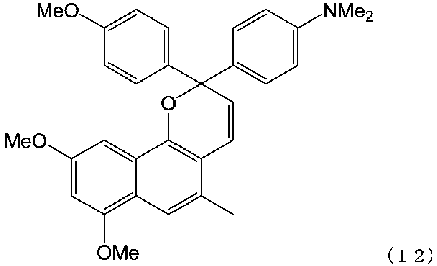

As the naphthopyran-based compound, one or more compounds selected from the compounds described above may be used.

The photochromic lens of the present embodiment can include 100 to 5,000 ppm and preferably 100 to 3,000 ppm of a naphthopyran-based compound with respect to 100 % by weight by of the resin. The addition amount cannot be unconditionally limited because the performance varies depending on the kinds of the naphthopyran-based compound, but is appropriately selected depending on the performance of the naphthopyran-based compound and the solubility in the polymerizable composition.

As the photochromic compound in the present embodiment, at least one selected from Formulae (a) and (b) can also be used.

PC-L-Chain (a)

PC-L-Chain-L'-PC' (b)

PC and PC' represent monovalent groups derived from the compounds of Formulae (c) to (f). PC and PC' may be identical to or different from each other.

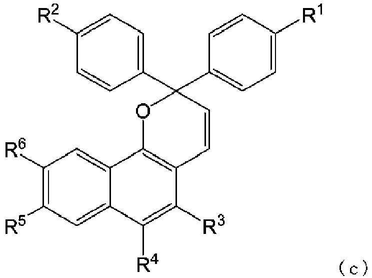

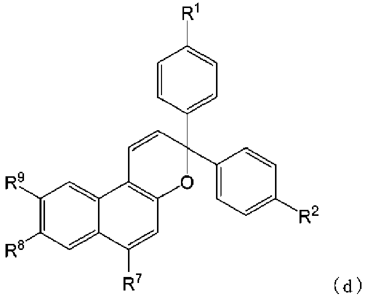

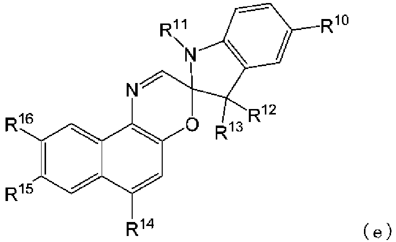

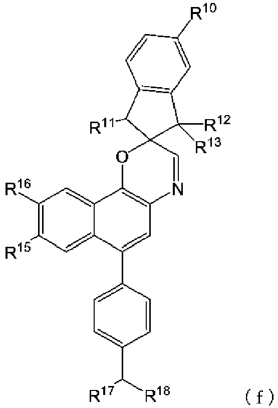

In Formulae (c) to (f), R¹ to R¹⁸ each represent hydrogen, a halogen atom, a carboxyl group, an acetyl group, a formyl group, a C1 to C20 aliphatic group which optionally be substituted, a C3 to C20 alicyclic group which optionally be substituted, or a C6 to C20 aromatic organic group which optionally be substituted, and may be identical to or different from each other. The aliphatic group, the alicyclic group, or the aromatic organic group may include an oxygen atom or a nitrogen atom. Any one group included in the compounds represented by the Formulae (c) to (f) is bonded to L or L' which is a divalent organic group.

Examples of the C1 to C20 aliphatic group which optionally be substituted include a linear or branched C1 to C10 alkyl group, a linear or branched C1 to C10 alkoxy group, a linear or branched C2-C10 alkenyl group, a C1 to C10 hydroxyalkyl group, a C1 to C10 hydroxyalkoxy group, a C1 to C10 alkyl group substituted with C1 to C10 alkoxy group, a C1 to C10 alkoxy group substituted with a C1 to C10 alkoxy group, a C1 to C5 haloalkyl group, a C1 to C5 dihaloalkyl group, a C1 to C5 trihaloalkyl group, a C1 to C10 alkylamino group, a C1 to C10 aminoalkyl group, and a linear or branched C1 to C20 alkoxycarbonyl group.

Examples of the C3 to C20 alicyclic group which optionally be substituted include a C3 to C20 cycloalkyl group and a C6 to C20 bicycloalkyl group.

Examples of the C6 to C20 aromatic organic group which optionally be substituted include a phenyl group, a C7 to C16 alkoxyphenyl group, an arylamino group, a diarylamino group, an aryl C1 to C5 alkylamino group, a cyclic amino group, an arylcarbonyl group, and an aroyl groups.

R¹ and R² each preferably include a hydrogen atom; a halogen atom;
a C1 to C20 aliphatic group which optionally be substituted such as a linear or branched C1 to C10 alkyl group, a linear or branched C1 to C10 alkoxy group, a C1 to C10 hydroxyalkoxy group, a C1 to C10 alkoxy group substituted with a C1 to C10 alkoxy group, a C1 to C5 haloalkyl group, a C1 to C5 dihaloalkyl group, a C1 to C5 trihaloalkyl group, a C1 to C5 alkylamino group; and
an C6 to C20 aromatic organic group which optionally be substituted such as a phenyl group, a C7 to C16 alkoxyphenyl group, a C1 to C5 dialkylamino group, an arylamino group, a diarylamino group, an aryl C1 to C5 alkylamino group, and a cyclic amino group. R¹ and R² may be identical to or different from each other.

Examples of R³ preferably include a hydrogen atom; a halogen atom; a carboxyl group; an acetyl group;
a C1 to C20 aliphatic group which optionally be substituted such as a linear or branched C1 to C10 alkyl group, a linear or branched C2 to C10 alkenyl group, a linear or branched C1 to C10 alkoxy group, a C1 to C10 hydroxyalkyl group, a C1 to C10 alkyl group substituted with a C1 to C10 alkoxy group, a C1 to C10 aminoalkyl group, and a linear or branched C1 to C20 alkoxycarbonyl group;
a C3 to C20 alicyclic group which optionally be substituted such as a C3 to C20 cycloalkyl group and a C6 to C20 bicycloalkyl group; and
a C6 to C20 aromatic organic group which optionally be substituted such as an arylcarbonyl group, a formyl group, and an aroyl group.

Examples of R⁴ preferably include a hydrogen atom; a halogen atom; a carboxyl group; an acetyl group; a formyl group;
a C1 to C20 aliphatic group which optionally be substituted such as a linear or branched C1 to C10 alkyl group, a linear or branched C2 to C10 alkenyl group, a linear or branched C1 to C10 alkoxy group, a C1 to C10 hydroxyalkyl group, a C1 to C10 alkyl group substituted with a C1 to C10 alkoxy group, a C1 to C10 aminoalkyl group, and a linear or branched C1 to C20 alkoxycarbonyl group;
a C3 to C20 alicyclic group which optionally be substituted such as a C3 to C20 cycloalkyl group and a C6 to C20 bicycloalkyl group; and
a C6 to C20 aromatic organic group which optionally be substituted such as an arylcarbonyl group, an aroyl group, a phenyl group, a C7 to C16 alkoxyphenyl group, a C1 to C10 dialkoxyphenyl group, a C1 to C10 alkylphenyl group, and a C1 to C10 dialkylphenyl group.

R³ and R⁴ may be bonded to each other. In a case where R³ and R⁴ are bonded to each other to form a ring structure, examples thereof include Formula (g) or (h). A dotted line portion represents a bond between a carbon atom to which R³ is bonded and a carbon atom to which R⁴ is bonded.

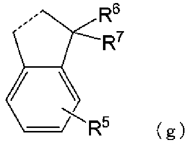

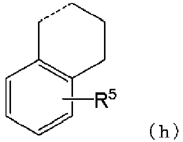

R⁵, R⁶, R⁷, R⁸, R⁹, R¹⁰, R¹⁴, R¹⁵, and R¹⁶ represent functional groups as in R¹, R². A plurality of R⁵ to R⁷ existing together may be identical to or different from each other.

R¹¹ preferably includes a hydrogen atom; a halogen atom;
a C1 to C20 aliphatic group which optionally be substituted such as a linear or branched C1 to C20 alkyl group, a C1 to C5 haloalkyl group, a C1 to C5 dihaloalkyl group, and a C1 to C5 trihaloalkyl group;
a C3 to C20 alicyclic group which optionally be substituted such as a C3 to C20 cycloalkyl group, a C6 to C20 bicycloalkyl group, a C3 to C20 cycloalkyl group substituted with a C1 to C5 alkyl group, and a C6 to C20 bicycloalkyl group substituted with a C1 to C5 alkyl group; and
a C6 to C20 aromatic organic group which optionally be substituted such as an aryl group which is substituted with a C1 to C5 alkyl group.

R¹² and R¹³ each preferably include a hydrogen atom; a halogen atom;
a C1 to C20 aliphatic group which optionally be substituted such as a C1 to C10 alkyl group and a C1 to C5 alkylalkoxycarbonyl group; and a C3 to C20 alicyclic group which optionally be substituted such as a C5 to C7 cycloalkyl group.

R¹⁷ and R¹⁸ each preferably include a hydrogen atom; a halogen atom;
a C1 to C20 aliphatic group which optionally be substituted such as a linear or branched C1 to C10 alkyl group and a C1 to C10 hydroxyalkyl group; and a C3 to C20 alicyclic group which optionally be substituted such as a C5 to C7 cycloalkyl group.

In Formula (a) or (b), L and L' each represent a divalent organic group including at least one group selected from an oxyethylene chain, an oxypropylene chain, a (thio) ester group, and a (thio) amide group.

Specifically, L and L' are represented by Formulae (i) to (o). L and L' may be identical to or different from each other.

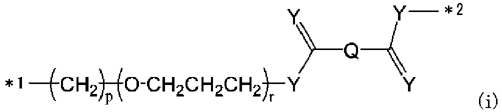

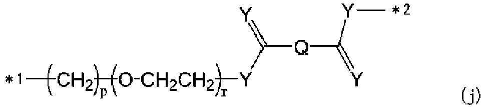

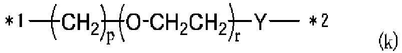

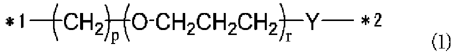

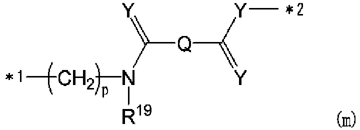

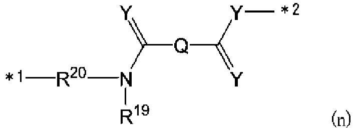

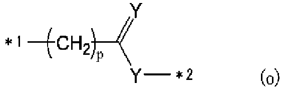

In Formulae (i) to (o), Y represents oxygen and sulfur.

R¹⁹ represents hydrogen and a linear or branched C1 to C10 alkyl group.

R²⁰ represents a linear or branched C1 to C10 alkylene group.

p represents an integer of 0 to 15, and r represents an integer of 0 to 10.

Q represents a linear or branched C1 to C10 alkylene group, a C1 to C10 alkenylene group, and a divalent group derived from a substituted aryl group at the 1,2-, 1,3-, and 1,4-position, and a divalent group derived from a substituted heteroaryl group.

*1 and *2 each represent a bonding hand, *1 is bonded to a monovalent or divalent organic group represented by "Chain", and *2 is bonded to a monovalent organic group represented by PC or PC'.

In Formula (a) or (b), "Chain" represents a monovalent or divalent organic group including at least one chain selected from a polysiloxane chain and a polyoxyalkylene chain.

Examples of the polysiloxane chain include a polydimethylsiloxane chain, a polymethylphenylsiloxane chain, and a polymethylhydrosiloxane chain.

Examples of the polyoxyalkylene chain include a polyoxyethylene chain, a polyoxypropylene chain, and a polyoxyhexamethylene chain
Specifically,
in a case where the photochromic compound is Formula (a), "Chain" represents a monovalent organic group of Formula (p) or (q).

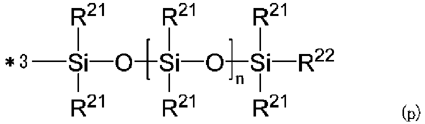

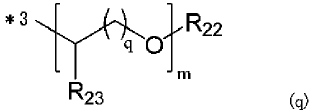

In a case where the photochromic compound is Formula (b), "Chain" represents a divalent organic group of Formula (r) or (s).

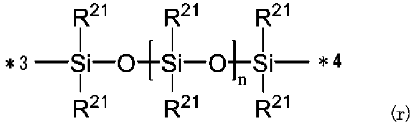

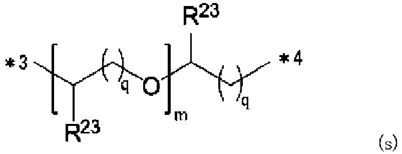

In Formulae (p) to (s),
R²¹ represents a linear or branched C1 to C10 alkyl group.
R²² represents a linear or branched C1 to C10 alkyl group.
R²³ represents hydrogen, a methyl group, and an ethyl group.
n represents an integer of 4 to 75, and m represents an integer of 1 to 50.
q represents an integer of 1 to 3.
*3 and *4 each represent a bonding hand, *3 is bonded to a divalent organic group represented by L, and *4 is bonded to a divalent organic group represented by L'.

The photochromic lens (100 % by weight) of the present embodiment can include 100 to 5,000 ppm and preferably 100 to 3,000 ppm of the photochromic compound represented by Formulae (a) or (b). The addition amount cannot be unconditionally limited because the performance varies depending on the kinds of the photochromic compound represented by Formula (a) or (b), but is appropriately selected depending on the performance of the photochromic compound represented by Formula (a) or (b) and the kind or the addition amount of the tetraazaporphyrin compound.

The photochromic compound of the present embodiment can be obtained by methods disclosed in WO2009/146509, WO2010/20770, WO2012/149599, and WO2012/162725.

Examples of the photochromic compound according to the present embodiment include Reversacol Humber Blue (a polydimethylsiloxane chain, naphthopyran-based chromophore (Formula (c))), Reversacol Calder Blue (a polydimethylsiloxane chain, a naphthopyran-based chromophore (Formula (c))), Reversacol Trent Blue (a polydimethylsiloxane chain, a naphthopyran-based chromophore (Formula c)), Reversacol Pennine Green (a polydimethylsiloxane chain, a naphthopyran-based chromophore (Formula (c))), Reversacol Heath Green (a polyoxyalkylene chain, a naphthopyran-based chromophore (Formula (c))), Reversacol Chilli Red (polydimethylsiloxane chain, naphthopyran chromophore (Formula (c))), Reversesacole Wembley Grey (polyoxyalkylene chain, naphthopyran chromophore (Formula (c))), and Reversacol Cayenne Red (a polyoxyalkylene chain, a naphthopyran-based chromophore (Formula (c))), and Reversacol Wilson Blue (a polyoxyalkylene chain, naphthopyran-based chromophore (Formula (c))) manufactured by Vivimed Labs Ltd.

### [(E) Polyisocyanate compound]

Examples of the polyisocyanate compound (E) include an aliphatic polyisocyanate compound such as hexamethylene diisocyanate, pentamethylene diisocyanate, 2,2,4-trimethylhexane diisocyanate, 2,4,4-trimethylhexamethylene diisocyanate, lysine diisocyanatomethyl ester, lysine triisocyanate, m-xylylene diisocyanate, o-xylylene diisocyanate, p-xylylene diisocyanate, xylylene diisocyanate, α,α,α',α'-tetramethylxylylene diisocyanate, bis(isocyanatomethyl) naphthalene, 1,3,5-tris(isocyanatomethyl) benzene, bis(isocyanatomethyl) sulfide, bis(isocyanatoethyl) sulfide, bis(isocyanatomethyl) disulfide, bis(isocyanatoethyl) disulfide, bis(isocyanatomethylthio) methane, bis(isocyanatoethylthio) methane, bis(isocyanatoethylthio) ethane, and bis(isocyanatomethylthio) ethane;
an alicyclic polyisocyanate compound such as isophorone diisocyanate, bis(isocyanatomethyl) cyclohexane, 1,2-bis(isocyanatomethyl) cyclohexane, 1,3-bis(isocyanatomethyl) cyclohexane, 1,4-bis(isocyanatomethyl) cyclohexane, dicyclohexylmethane diisocyanate, dicyclohexylmethane-4,4'-diisocyanate, dicyclohexylmethane-2,4'-diisocyanate, cyclohexane diisocyanate, methyl cyclohexane diisocyanate, dicyclohexyl dimethyl methane isocyanate, 2,5-bis(isocyanatomethyl) bicyclo-[2.2.1]-heptane, 2,6-bis(isocyanatomethyl) bicyclo-[2.2.1]-heptane, 3,8-bis(isocyanatomethyl) tricyclodecane, 3,9-bis(isocyanatomethyl) tricyclodecane, 4,8-bis(isocyanatomethyl) tricyclodecane, and 4,9-bis(isocyanatomethyl) tricyclodecane;
an aromatic polyisocyanate compound such as diphenyl sulfide-4,4-diisocyanate, tolylene diisocyanate, phenylene diisocyanate, 1,3-phenylene diisocyanate, 1,4-phenylene diisocyanate, and diphenylmethane diisocyanate; and
a heterocyclic polyisocyanate compound such as 2,5-diisocyanatothiophene, 2,5-bis(isocyanatomethyl) thiophene, 2,5-diisocyanatotetrahydrothiophene, 2,5-bis(isocyanatomethyl) tetrahydrothiophene, 3,4-bis(isocyanatomethyl) tetrahydrothiophene, 2,5-diisocyanato-1,4-dithiane, 2,5-bis(isocyanatomethyl)-1,4-dithiane, 4,5-diisocyanato-1,3-dithiolane, and 4,5-bis(isocyanatomethyl)-1,3-dithiolane. As the polyisocyanate compound (E), at least one selected from these can be used.

Examples of the polyisocyanate compound (E) include a modified product and/or a mixture with a modified product, in addition to monomers, and examples of the modified products of isocyanate include a multimer, a biuret-modified product, an allophanate-modified product, an oxadiazinetrione-modified product, and a polyol-modified product. Examples of the multimer include a dimer such as urettione, uretimine, and carbodiimide, and a trimer or higher multimer such as isocyanurate and iminooxadiane dione.

The polyisocyanate compound (E) is preferably at least one selected from hexamethylene diisocyanate, pentamethylene diisocyanate, m-xylylene diisocyanate, p-xylylene diisocyanate, isophorone diisocyanate, bis(isocyanatomethyl) cyclohexane, dicyclohexylmethane diisocyanate, 2,5-bis(isocyanatomethyl)bicyclo-[2.2.1]-heptane, 2,6-bis(isocyanatomethyl)bicyclo-[2.2.1]-heptane, tolylene diisocyanate, phenylene diisocyanate, and diphenylmethane diisocyanate, and
more preferably at least one selected from isophorone diisocyanate, m-xylylene diisocyanate, p-xylylene diisocyanate, bis(isocyanatomethyl) cyclohexane, dicyclohexylmethane diisocyanate, 2,5-bis(isocyanatomethyl) bicyclo-[2.2.1]-heptane, and 2,6-bis(isocyanatomethyl) bicyclo-[2.2.1]-heptane. These polyisocyanate compounds may be used singly or two or more kinds may be used in a mixture.

In a case where the above compound is used as the polyisocyanate compound (E), particularly in a case where m-xylylene diisocyanate is used, the phenomenon that the cured light control material is colored red is particularly remarkably observed. That is, in the present embodiment, in a case where the above compound is used as the polyisocyanate compound (E), particularly in a case where m-xylylene diisocyanate is used, the red coloring suppression effect by the phosphite triester (A) becomes particularly remarkable.

### [(F) Difunctional or higher functional active hydrogen compound]

According to the present embodiment, the difunctional or higher functional active hydrogen compound (F) does not include an alcohol compound (C) represented by Formulae (3a) and (3b) described below. The difunctional or higher functional active hydrogen compound (F) (hereinafter, simply referred to as the "active hydrogen compound (F)") is not particularly limited, but examples thereof include a polyol compound, a polythiol compound, and a thiol compound having a hydroxy group. These can be appropriately used in combination.

Examples of the polyol compound include aliphatic polyol such as neopentyl glycol, glycerin, trimethylol ethane, trimethylolpropane, ditrimethylolpropane, butanetriol, 1,2-methyl glucoside, pentaerythritol, dipentaerythritol, tripentaerythritol, sorbitol, erythritol, sureitol, ribitol, arabinitol, xylitol, allitol, manitole, dolcitol, iditol, inositol, hexane triol, triglycerol, diglylperol, tris(2-hydroxyethyl) isocyanurate, cyclobutanediol, cyclopentanediol, cyclohexane diol, cycloheptanediol, cyclooctanediol, cyclohexane dimethanol, hydroxypropylcyclohexanol, tricyclo[5.2.1.0^{2,6}]decane-dimethanol, bicyclo[4.3.0]-nonanediol, tricyclo[5.3.1.1]dodecanediol, bicyclo[4.3.0]nonanedimethanol, tricyclo[5.3.1.1]dodecane-diethanol, hydroxypropyl tricyclo[5.3.1.1]dodecanol, spiro[3.4]octanediol, butyl cyclohexane diol, 1,1'-bicyclohexylidene diol, cyclohexane triol, maltitol, and lactose;
aromatic polyol such as dihydroxynaphthalene, trihydroxynaphthalene, tetrahydroxynaphthalene, dihydroxybenzene, benzene triol, biphenyltetraol, pyrogallol, (hydroxynaphthyl) pyrogallol, trihydroxy phenanthrene, bisphenol A, bisphenol F, xylylene glycol, di(2-hydroxyethoxy) benzene, bisphenol A-bis-(2-hydroxyethyl ether), tetrabrom bisphenol A, and tetrabromobisphenol A-bis-(2-hydroxyethyl ether);
halogenated polyol such as dibromoneopentyl glycol;
a compound obtained by adding trifunctional or higher functional alcohol and ethylene oxide, propylene oxide, or ε-caprolactone such as an ethylene oxide adduct of glycerol, an ethylene oxide adduct of trimethylolpropane, an ethylene oxide adduct of pentaerythritol, a propylene oxide adduct of glycerol, a propylene oxide adduct of trimethylolpropane, a propylene oxide adduct of pentaerythritol, caprolactone modified glycerol, caprolactone-modified trimethylolpropane, and caprolactone-modified pentaerythritol; and
polymer polyol such as an epoxy resin. According to the present embodiment, at least one selected from these can be used in combination.

Other examples of the polyol compound also include a condensation reaction product of the above polyol and an organic acid such as oxalic acid, glutamic acid, adipic acid, acetic acid, propionic acid, cyclohexane carboxylic acid, β-oxocyclohexane propionic acid, dimer acid, phthalic acid, isophthalic acid, salicylic acid, 3-bromopropionic acid, 2-bromoglycol, dicarboxycyclohexane, pyromellitic acid, butanetetracarboxylic acid, and bromophthalic acid;
an addition reaction product of above polyol and alkylene oxide such as ethylene oxide and propylene oxide;
an addition reaction product of alkylene polyamine and alkylene oxide such as ethylene oxide and propylene oxide;
bis-[4-(hydroxyethoxy) phenyl] sulfide, bis-[4-(2-hydroxypropoxy)phenyl]sulfide, bis-[4-(2,3-dihydroxypropoxy) phenyl] sulfide, bis-[4-(4-hydroxycyclohexyloxy) phenyl] sulfide, bis-[2-methyl-4-(hydroxyethoxy)-6-butylphenyl] sulfide, and a compound obtained by adding ethylene oxide and/or propylene oxide having three molecules or less in average per hydroxyl group to these compounds; and
sulfur atom-containing polyol such as di-(2-hydroxyethyl) sulfide, 1,2-bis-(2-hydroxyethyl mercapto) ethane, bis(2-hydroxyethyl) disulfide, 1,4-dithiane-2,5-diol, bis(2,3-dihydroxypropyl) sulfide, tetrakis(4-hydroxy-2-thiabutyl) methane, bis(4-hydroxyphenyl) sulfone (trade name BISPHENOL S), tetrabromobisphenol S, tetramethyl bisphenol S, 4,4'-thiobis(6-tert-butyl-3-methylphenol), and 1,3-bis(2-hydroxyethylthioethyl)-cyclohexane. According to the present embodiment, at least one selected from these can be used in combination.

Examples of the polythiol compound include an aliphatic polythiol compound such as methanedithiol, 1,2-ethanedithiol, 1,2,3-propanetrithiol, 1,2-cyclohexanedithiol, bis(2-mercaptoethyl) ether, tetrakis(mercaptomethyl) methane, diethylene glycol bis(2-mercaptoacetate), diethylene glycol bis(3-mercaptopropionate), ethylene glycol bis(2-mercaptoacetate), ethylene glycol bis(3-mercaptopropionate), trimethylolpropane tris(2-mercaptoacetate), trimethylolpropane tris(3-mercaptopropionate), trimethylol ethane tris(2-mercaptoacetate), trimethylol ethane tris(3-mercaptopropionate), pentaerythritol tetrakis(2-mercaptoacetate), pentaerythritol tetrakis(3-mercaptopropionate), bis(mercaptomethyl) sulfide, bis(mercaptomethyl) disulfide, bis(mercaptoethyl) sulfide, bis(mercaptoethyl) disulfide, bis(mercaptopropyl) sulfide, bis(mercaptomethylthio) methane, bis(2-mercaptoethylthio) methane, bis(3-mercaptopropylthio) methane, 1,2-bis(mercaptomethylthio) ethane, 1,2-bis(2-mercaptoethylthio)ethane, 1,2-bis(3-mercaptopropylthio)ethane, 1,2,3-tris(mercaptomethylthio)propane, 1,2,3-tris(2-mercaptoethylthio)propane, 1,2,3-tris(3-mercaptopropylthio)propane, 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, tetrakis(mercaptomethylthiomethyl)methane, tetrakis(2-mercaptoethylthiomethyl)methane, tetrakis(3-mercaptopropylthiomethyl)methane, bis(2,3-dimercaptopropyl)sulfide, 2,5-dimercaptomethyl-1,4-dithiane, 2,5-dimercapto-1,4-dithiane, 2,5-dimercaptomethyl-2,5-dimethyl-1,4-dithiane, an ester of these thioglycolic acid and mercaptopropionic acid, hydroxymethyl sulfide bis(2-mercaptoacetate), hydroxymethyl sulfide bis(3-mercaptopropionate), hydroxyethyl sulfide bis(2-mercaptoacetate), hydroxyethyl sulfide bis(3-mercaptopropionate), hydroxymethyl disulfide bis(2-mercaptoacetate), hydroxymethyl disulfide bis(3-mercaptopropionate), hydroxyethyl disulfide bis(2-mercaptoacetate), hydroxyethyl disulfide bis(3-mercaptopropinate), 2-mercaptoethyl ether bis(2-mercaptoacetate), 2-mercaptoethyl ether bis(3-mercaptopropionate), thiodiglycolic acid bis(2-mercaptoethyl ester), thiodipropionic acid bis(2-mercaptoethyl ester), dithiodiglycolic acid bis(2-mercaptoethyl ester), dithiodipropionic acid bis(2-mercaptoethyl ester), 1,1,3,3-tetrakis(mercaptomethylthio) propane, 1,1,2,2-tetrakis(mercaptomethylthio) ethane, 4,6-bis(mercaptomethylthio)-1,3-dithiane, tris(mercaptomethylthio) methane, and tris(mercaptoethylthio) methane;
an aromatic polythiol compound such as 1,2-dimercaptobenzene, 1,3-dimercaptobenzene, 1,4-dimercaptobenzene, 1,2-bis(mercaptomethyl)benzene, 1,3-bis(mercaptomethyl)benzene, 1,4-bis(mercaptomethyl)benzene, 1,2-bis(mercaptoethyl)benzene, 1,3-bis(mercaptoethyl)benzene, 1,4-bis(mercaptoethyl)benzene, 1,3,5-trimercaptobenzene, 1,3,5-tris(mercaptomethyl) benzene, 1,3,5-tris(mercaptomethyleneoxy) benzene, 1,3,5-tris(mercaptoethyleneoxy)benzene, 2,5-toluenedithiol, 3,4-toluenedithiol, 1,5-naphthalene dithiol, and 2,6-naphthalenedithiol; and
a heterocyclic polythiol compound such as 2-methylamino-4,6-dithiol-sym-triazine, 3,4-thiophenedithiol, bismuthiol, 4,6-bis(mercaptomethylthio)-1,3-dithiane, and 2-(2,2-bis(mercaptomethylthio)ethyl)-1,3-dithietane, but these are not limited to the exemplified compounds. According to the present embodiment, at least one selected from these can be used in combination.

Examples of the thiol compound having a hydroxy group include 2-mercaptoethanol, 3-mercapto-1,2-propanediol, glycerin bis(mercaptoacetate), 4-mercaptophenol, 2,3-dimercapto-1-propanol, pentaerythritol tris(3-mercaptopropionate), and pentaerythritol tris(thioglycolate), and the present invention is not limited only to these exemplified compounds.

Oligomers of these active hydrogen compounds or a halogen-substituted product such as a chlorine-substituted product and a bromine-substituted product may be used. These active hydrogen compounds may be used singly or two or more kinds thereof may be used in a mixture.

According to the present embodiment, in view of physical properties such as mechanical strength of the obtained molded product, it is preferable that a trifunctional or higher functional active hydrogen compound is used as the active hydrogen compound (F).

Specifically, at least one selected from glycerin, pentaerythritol tetrakis(2-mercaptoacetate), pentaerythritol tetrakis(3-mercaptopropionate), 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 1,1,3,3-tetrakis(mercaptomethylthio) propane, and trimethylolpropane tris(3-mercaptopropionate) is preferably used.

### [(C) Alcohol compound]

The polymerizable composition for an optical material of the present embodiment can further include the alcohol compound (C) . In a case of including the alcohol compound (C), an optical material having an excellent photochromic performance can be obtained. In a case of using the phosphite triester (A) and the alcohol compound (C) in combination, the red coloration of the optical material is further suppressed regardless of the quality of the polyisocyanate compound, and simultaneously yellow coloration can be effectively suppressed. Therefore, a particularly satisfactory initial color can be obtained.

As the alcohol compound (C), at least one selected from a compound represented by Formula (3a) and a compound represented by Formula (3b) can be used.

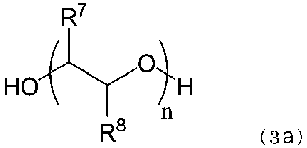

In Formula (3a) , R⁷ and R⁸ each represent a hydrogen atom, a methyl group, or an ethyl group, and at least one thereof is a hydrogen atom. R⁷ and R⁸ may be identical to or different from each other. n represents an integer of 30 to 500.

As the alcohol compound represented by Formula (3a), specifically, a compound represented by Formula (4a) can be used.

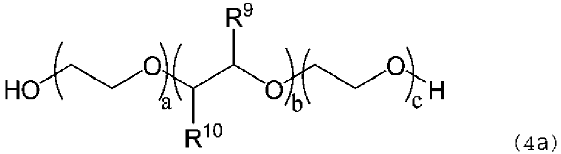

In Formula (4a), R⁹ and R¹⁰ represent a hydrogen atom, a methyl group, or an ethyl group, and at least one thereof is a hydrogen atom. R⁹ and R¹⁰ may be identical to or different from each other. The sum of a and c is an integer of 2 to 400, and b is an integer of 1 to 100.

The number average molecular weight of the alcohol compound (C) is 1,000 to 15,000 and preferably 1,500 to 7,500.

Examples of the alcohol compound represented by Formula (3a) include ADEKA PLURONIC series manufactured by Adeka Corporation, and PLURONIC series manufactured by BASF SE. Non-patent document 1 discloses the structure of compounds included in the Pluronic series.

The alcohol compound represented by Formula (3a) is preferably ADEKA PLURONIC L-44, L-62, L-64, L-72, P-84, and P-85 manufactured by Adeka Corporation, and PLURONIC L-43, L-44, L-62, L-64, L-72, P-65, P-84, P-85, F-68, and F-77 manufactured by BASF SE,
and more preferably ADEKA PLURONIC L-62, L-64, P-84, and P-85 manufactured by Adeka Corporation, and PLURONIC L-62, L-64, L-72, P-65, P-84, P-85, and F-77 manufactured by BASF SE. These alcohol compounds may be used singly or two or more kinds thereof may be used in a mixture.

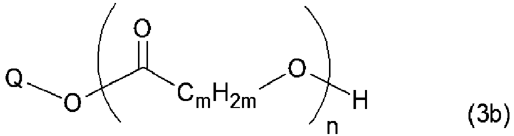

In Formula (3b), Q represents a divalent group derived from diol, or a trivalent to 30-valent group derived from polyol having at least three primary alcohol groups. m represents an integer of 3 to 10, and n represents an integer of 2 to 30.

In the formula, an oxygen atom directly connected to Q is an oxygen atom derived from diol or an oxygen atom derived from polyol.

In view of the effects of the present invention, Q is preferably a trivalent to 30-valent group derived from polyol having at least three primary alcohol groups.

Examples of the diol include ethylene glycol, propylene glycol, neopentyl glycol, 1,2-propanediol, 1,4-butanediol, and 1,6-hexanediol.

Examples of the polyol having at least three primary alcohol groups include trimethylolpropane, pentaerythritol, and dipentaerythritol.

As the alcohol compound represented by Formula (3b), CAPApolycaprolactone polyol series manufactured by Perstorp Holding AB, and PLACCEL series manufactured by DAICEL Corporation. These alcohol compounds may be used singly or two or more kinds thereof may be used in a mixture.

In the present embodiment, the alcohol compound represented by Formula (3a) and the alcohol compound represented by Formula (3b) can be used in combination.

### [(B) Acidic phosphate ester]

The polymerizable composition for an optical material according to the present embodiment can further include an acidic phosphate ester (B). In a case of including the acidic phosphoric acid ester (B), it is possible to obtain an optical material that is excellent in releasability and excellent in a red coloration suppression effect.

The acidic phosphate ester (B) can be represented by Formula (2) .

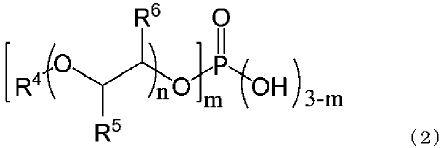

In Formula (2), m represents an integer of 1 or 2, n represents an integer of 0 to 18, R⁴ represents an alkyl group having 1 to 20 carbon atoms, and R⁵ and R⁶ each independently represents a hydrogen atom, a methyl group, or an ethyl group.

In the present embodiment, n is preferably an integer of 4 or less, and R⁴ is preferably an alkyl group having 1 to 12 carbon atoms.

Examples of R⁴ in Formula (2) include an organic residue derived from a linear aliphatic compound such as methane, ethane, propane, butane, pentane, hexane, heptane, octane, nonane, decane, undecane, dodecane, tetradecane, hexadecane;
an organic residue derived from a branched chain aliphatic compound such as 2-methylpropane, 2-methylbutane, 2-methylpentane, 3-methylpentane, 3-ethylpentane, 2-methylhexane, 3-methylhexane, 3-ethylhexane, 2-methylheptane, 3-methylheptane, 4-methylheptane, 3-ethylheptane, 4-ethylheptane, 4-propylheptane, 2-methyloctane, 3-methyloctane, 4-methyloctane, 3-ethyloctane, 4-ethyloctane, and 4-propyloctane;
an organic residue derived from an alicyclic compound such as cyclopentane, cyclohexane, 1,2-dimethylcyclohexane, 1,3-dimethylcyclohexane, and 1,4-dimethylcyclohexane;

However, the present invention is not limited only to these exemplary compounds.
n in Formula (2) is preferably an integer of 10 or less and more preferably an integer of 4 or less.

R⁴ in Formula (2) is preferably an alkyl group having 1 to 18 carbon atoms and more preferably an alkyl group having 1 to 12 carbon atoms.

As the acid phosphate ester (B), ZeleCUN manufactured by STEPAN Company, JP series manufactured by Johoku Chemical Co., Ltd., PHOSPHANOL series manufactured by Toho Chemical Industry Co., Ltd., and AP and DP series manufactured by Daihachi Chemical Industry Co., Ltd. can be used.

### [Other components]

In the present embodiment, in addition to the components (A) to (F), an ultraviolet absorbing agent, a light stabilizer, a polymerization catalyst, a resin modifier, and the like may be further included.

Examples of the ultraviolet absorbing agent include a benzotriazole-based ultraviolet absorbing agent, a triazine-based ultraviolet absorbing agent, a benzophenone-based ultraviolet absorbing agent, a cyanoacrylate-based ultraviolet absorbing agent, a diphenylacrylate-based absorbing agent, a phenolic ultraviolet absorbing agent, an oxanilide-based ultraviolet absorbing agent, and a malonate ester-based ultraviolet absorbing agent. With respect to the ability as the ultraviolet absorbing agent, a maximum absorption wavelength is 330 nm or less, and a ratio of an absorbance at 360 nm with respect to an absorbance of a maximum absorption wavelength is preferably 0.1 or less and more preferably 0.05 or less . Examples of the ultraviolet absorbing agent corresponding to the preferable numerical range include an oxanilide-based ultraviolet absorbing agent represented by Formula (I) and a malonic ester-based ultraviolet absorbing agent represented by Formula (II).

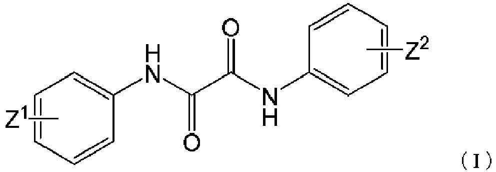

In Formula (I), Z¹ and Z² may be identical to or different from each other, and examples thereof include a C1 to C6 alkyl group and a C1 to C6 alkoxy group.

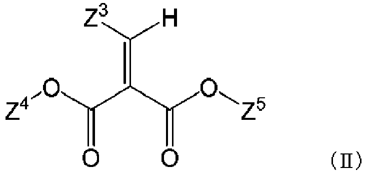

In Formula (II), examples of Z³ include a C6 to C20 aromatic organic group which optionally be substituted and a C5 to C20 alicyclic group which optionally be substituted, Z⁴ and Z⁵ may be identical to or different from each other, and examples thereof include a C1 to C6 alkyl group and a C1 to C6 alkoxy group.

Examples of the C6 to C20 aromatic organic group include a phenyl group, a benzyl group, a benzoyl group, and a p-methoxybenzyl group. Examples of the C5 to C20 alicyclic group include a cyclopentyl group, a cyclohexyl group, a cycloheptyl group, a cyclooctyl group, a cyclopentanyl group, and a cyclodecanyl group.

Examples of a substituent of the substituted C6 to C20 aromatic organic group or a substituent of the substituted C5 to C20 alicyclic group include a C1 to C6 alkyl group and a C1 to C6 alkoxy group.

In Formula (I) or (II), examples of the C1 to C6 alkyl group include a methyl group, an ethyl group, a butyl group, a propyl group, a pentyl group, and a hexyl group, and examples of the C1 to C6 alkoxy group include a methoxy group, an ethoxy group, a butoxy group, and a phenoxy group.

Specific compound names include 2-ethyl-2'-ethoxyoxanilide and dimethyl (p-methoxybenzylidene) malonate.

Specific examples of an ultraviolet absorbing agent having an effect of improvement on light fastness which is used for the polymerizable composition for an optical material of the present embodiment include Seesorb 107 (manufactured by Shipro Kasei Kaisha Ltd.), Viosorb 583 (manufactured by Kyodo Chemical Co., Ltd.), Tinuvin 405 (manufactured by BASF SE), Tinuvin PS (manufactured by BASF SE), HOSTAVIN PR 25 (manufactured by CLARIANT), and HOSTAVIN VSU (manufactured by CLARIANT), and HOSTAVIN PR 25 and HOSTAVIN VSU are preferable.

In view of the effect of the present invention, the ultraviolet absorbing agent can be included in the polymerizable composition for an optical material, in an amount of 200 to 14,000 ppm, preferably 500 to 14,000 ppm, more preferably 1,000 to 12,000 ppm, and particularly preferably 5,000 to 10,000 ppm.

A hindered amine-based light stabilizer is used as the light stabilizer.

Specific examples of the hindered amine-based light stabilizer include bis(1,2,2,6,6-pentamethyl-4-piperidine) sebacate, 1-(1,2,2,6,6-pentamethyl-4-piperidinyl) 10-methyl sebacate, bis(1-undecanoxy-2,2,6,6-tetramethyl-4-piperidine) carbonate, bis(2,2,6,6-tetramethyl-1-piperidine-4-oxyl) sebacate, 2,2,6,6-tetramethyl-4-piperidine hexadecanoate, and 2,2,6,6-tetramethyl-4-piperidine octadecanoate, and
bis(1,2,2,6,6-pentamethyl-4-piperidine) sebacate, bis(1-undecanoxy-2,2,6,6-tetramethyl-4-piperidine)carbonate, 2,2,6,6-tetramethyl-4-piperidine hexadecanoate, and 2,2,6,6-tetramethyl-4-piperidine octadecanoate are preferable.

Specific examples thereof include LA72 (manufactured by ADEKA Corporation), LA81 (manufactured by ADEKA Corporation), and LA402AF (manufactured by ADEKA Corporation).

The addition amount of the light stabilizer is included in the polymerizable composition for an optical material in an amount of 500 to 5,000 ppm, preferably 1,000 to 4,000 ppm, and even more preferably 2,500 to 3,500 ppm.

Examples of the polymerization catalyst include a tertiary amine compound and an inorganic acid salt or an organic acid salt thereof, a metal compound, quaternary ammonium salt, or organic sulfonic acid.

Examples of the resin modifier include an episulfide compound, an alcohol compound, an amine compound, an epoxy compound, an organic acid and an anhydride thereof, an olefin compound including a (meth)acrylate compound, and the like.

### <Process of producing polymerizable composition for an optical material>

The polymerizable composition for an optical material according to the present embodiment
can be prepared by mixing the phosphite triester (A), the photochromic compound (D), the polyisocyanate compound (E), and the active hydrogen compound (F).

According to the present embodiment, in a case where the active hydrogen compound (F) is a polythiol compound, a molar ratio (NCO group/(SH group) of NCO groups included in the polyisocyanate compound (E) with respect to a sum of SH groups is generally in the range of 0.8 to 1.2, preferably in the range of 0.85 to 1.15, and even more preferably in the range of 0.9 to 1.1.

In a case where the molar ratio of the NCO group/SH group is within the above range, the composition is sufficiently cured, and a resin having excellent heat resistance, moisture resistance, and light resistance can be obtained.

The polymerizable composition for an optical material of the present embodiment can further include the alcohol compound (C) and/or the acidic phosphate ester (B) as necessary.

In a case where the alcohol compound (C) is added, the molar ratio of the NCO group included in the polyisocyanate compound (E) with respect to the sum of the OH groups and the SH groups included in the alcohol compound (C) and the active hydrogen compound (F) (NCO group/(OH group + SH group)) is used within the above range.

In view of the effect of the present invention, the polymerizable composition for an optical material of the present embodiment preferably include 0.01 % by weight to 0.5 % by weight, more preferably 0.05 % by weight to 0.5 % by weight, even more preferably 0.05 % by weight to 0.3 % by weight, particularly preferably 0.05 % by weight to 0.2 % by weight of the phosphite triester (A) with respect to 100 % by weight of the polymerizable composition for an optical material.

In a case where the polymerizable composition for an optical material according to the present embodiment includes the compound represented by Formula (3a) as the alcohol compound (C), in view of the effect of the present invention, the content of the phosphite triester (A) can be 0.01 % by weight to 0.5 % by weight, preferably 0.05 % by weight to 0.5 % by weight, more preferably 0.1 % by weight to 0.3 % by weight, and particularly preferably 0.1 % by weight to 0.2 % by weight with respect to 100 % by weight of the polymerizable composition for an optical material.

In a case where the polymerizable composition for an optical material according to the present embodiment includes the compound represented by Formula (3b) as the alcohol compound (C), in view of the effect of the present invention, the content of the phosphite triester (A) can be 0.01 % by weight to 0.5 % by weight, preferably 0.01 % by weight to 0.3 % by weight, more preferably 0.01 % by weight to 0.1 % by weight, and particularly preferably 0.05 % by weight to 0.1 % by weight with respect to 100 % by weight of the polymerizable composition for an optical material.

In a case where the alcohol compound (C) is added, in a case where the molar ratio of the NCO group/(OH group + SH group) is in the above range, the composition is sufficiently cured, and a resin having excellent heat resistance, excellent moisture resistance, and excellent light resistance can be obtained.

The photochromic compound (D) can be used in an amount of 10 ppm to 5,000 ppm with respect to 100 % by weight of the polymerizable composition for an optical material.

In a case where the phosphite triester (A), the photochromic compound (D), the polyisocyanate compound (E), and the active hydrogen compound (F), together with the acidic phosphate ester (B) and/or the alcohol compound (C), and other additives, if necessary are mixed to prepare a polymerizable composition, the preparation is performed generally at the temperature of 25°C or less. In view of the pot life of the polymerizable composition, it is preferable that the temperature is further decreased in some cases. However, in a case where the solubility of the catalyst, the internal release agent, and the additive to the polymerizable composition is not satisfactory, it is possible to heat and dissolve the catalyst, the internal release agent, and the additive in the polymerizable composition, in advance.

The mixing order and the mixing method of the respective components in the composition are not particularly limited as long as respective components can be uniformly mixed, and mixing can be performed by a well-known method. Examples of the well-known method include a method of preparing a master batch including a predetermined amount of an additive and dispersing and dissolving the master batch in the polymerizable composition.

In the present embodiment, the process of producing the polymerizable composition for an optical material preferably includes manufacturing a master batch (intermediate composition) including the phosphite triester (A), the photochromic compound (D), and the polyisocyanate compound (E) and mixing the active hydrogen compound (F) with the master batch.

In addition, in a case where a part of the component (E) constituting the polymerizable composition for an optical material is mixed in the producing the master batch (intermediate composition), the remaining component (E) can be separately added in the subsequent step. The component (E) included in the master batch and the component (E) added separately in the subsequent step may be identical to or different from each other.

Specifically, the step (method) for manufacturing the master batch includes mixing the phosphite triester (A) and the polyisocyanate compound (E), and
mixing the photochromic compound (D) with the mixture liquid obtained in the above step.

In a case of adding the component (A) to the component (E) in advance before the component (D) and the component (E) are in contact with each other, the red coloration is further suppressed, and an optical material having an excellent initial color can be obtained.

As the polyisocyanate compound (E) used in manufacturing the master batch, a composition including 2,5-bis(isocyanatomethyl)bicyclo-[2.2.1]-heptane and 2,6-bis(isocyanatomethyl)bicyclo-[2.2.1]heptane, m-xylylene diisocyanate, and the like are preferably used, and a composition including 2,5-bis(isocyanatomethyl)bicyclo-[2.2.1]-heptane and 2,6-bis(isocyanatomethyl)bicyclo-[2.2.1]-heptane is more preferably used.

In a case of using these compounds as the component (E), red coloration is further suppressed, and an optical material having excellent initial color can be obtained, and simultaneously dispersibility of the phosphite triester (A) to the polymerizable composition for an optical material is improved.

In the present embodiment, in view of the effect of the present invention, the master batch includes 0.1% by weight to 2 % by weight, preferably 0.2 % by weight to 1.9 % by weight, and more preferably 0.2 % by weight to 1.8% by weight of the phosphite triester (A) with respect to 100 % by weight of the total amount of the phosphite triester (A), the photochromic compound (D), and the polyisocyanate compound (E) .

In a case where the acidic phosphate ester (B) and the alcohol compound (C) are used, preferable process of producing the polymerizable composition for an optical material includes
adding and mixing the phosphite triester (A) to the polyisocyanate compound (E),
adding and mixing the photochromic compound (D) to the composition obtained in the above step;
subsequently, mixing the acidic phosphate ester (B), the alcohol compound (C), and the remaining polyisocyanate compound (E) constituting the polymerizable composition for an optical material with the composition obtained in the above step, and
mixing the active hydrogen compound (F) with the composition obtained in the above step.

### <Process of producing the optical material>

According to the present embodiment, the process of producing the optical material is not particularly limited. However, examples of the preferable process include cast polymerization. First, the polymerizable composition is injected between molded dies held by a gasket or a tape. In this case, depending on the physical properties required for the plastic lens to be obtained, in many cases, a defoaming treatment under reduced pressure, and a filtration treatment under pressurization, depressurization, and the like are preferably performed, if necessary.

The polymerization condition largely differs depending on the composition of the polymerizable composition, the kind and the use amount of the catalyst, the shape of the mold, and the like, and thus the polymerization condition is not limited. However, the polymerization is performed at the temperature of -50°C to 150°C and over 1 to 50 hours. In some cases, it is preferable that the temperature is maintained or is gradually increased in a temperature range of 10°C to 150°C, and the polymerizable composition is cured for 1 to 25 hours.

The optical material may be subjected to a treatment such as annealing, if necessary. With respect to the treatment temperature, the treatment is generally performed at 50°C to 150°C, preferably performed at 90°C to 140°C, and more preferably at 90°C to 130°C.

According to the present embodiment, in order to mold the resin, in addition to the above "other components", in the same manner as the well-known molding method, in accordance with the purpose, various additives such as a chain extender, a crosslinking agent, an antioxidant, a bluing agent, an oil soluble dye, a filler, an adhesiveness improver, and a specific wavelength absorber may be added.

### <Application>

The polymerizable composition of the present embodiment may be obtained as molded products in various shapes by changing types of the mold in a case of the cast polymerization. The molded product includes a photochromic performance and includes a high refractive index and high transparency, thus can be used in various optical materials such as a plastic lens. Particularly, the molded product can be suitably used as a plastic spectacle lens or a plastic polarized lens.

### [Plastic spectacle lens]

The plastic spectacle lens using the lens substrate comprised of the molded product of the present embodiment may be used by providing a coating layer on one surface or both surfaces thereof.

The plastic spectacle lens of the present embodiment is comprised of a lens substrate and a coating layer comprised of the polymerizable composition.

Specific examples of the coating layer include a primer layer, a hard coat layer, an antireflection layer, an anti-fog coating layer, an antifouling layer, and a water repellent layer. These coating layers may be used singly or a plurality of coating layers may be used in multilayers. In a case where coating layers are provided on both the surfaces, the same coating layer may be provided on each surface, or different coating layers may be provided on each surface.

These coating layers each contain an ultraviolet absorbing agent for the purpose of protecting lenses or eyes from ultraviolet rays, an infrared absorbing agent for the purpose of protecting eyes from infrared rays, contain a light stabilizer and an antioxidant, for the purpose of improving the weather fastness of the lens, and contain a dye, a pigment, or an antistatic agent for the purpose of improving the fashionability of the lens, and other well-known additives may be used in combination for enhancing the performance of the lens. With respect to the layer to be coated by application, various leveling agents for improving applicability may be used.

The primer layer is generally formed between a hard coat layer described below and the lens. The primer layer is a coating layer intended to improve the adhesiveness between the hard coat layer formed thereon and the lens and the impact resistance can be improved in some cases. Any material can be used as the primer layer as long as the material has high adhesiveness to the obtained lens, but a primer composition including a urethane-based resin, an epoxy-based resin, a polyester-based resin, a melanin-based resin, and polyvinyl acetal as main components is generally used. For the purpose of adjusting the viscosity of the composition, a suitable solvent which does not affect the lens may be used as the primer composition. It is obvious that no solvent may be used.

The primer layer can be formed by any one of a coating method or a dry method. In the case where a coating method is used, a primer layer is formed by applying the primer composition to a lens by a well-known coating method such as spin coating and dip coating and then solidifying the primer composition. In a case where a dry method is used, a primer layer is formed by a well-known dry method such as a CVD method or a vacuum evaporation method. In a case where a primer layer is formed, for the purpose of improving adhesiveness, the surface of the lens may be subjected to pretreatments such as an alkali treatment, a plasma treatment, and an ultraviolet treatment, if necessary.

The hard coat layer is a coating layer intended to provide the lens surface with functions such as scratch resistance, wear resistance, moisture resistance, hot water resistance, heat resistance, and weather fastness.

Generally, for the hard coat layer, a hard coat composition including an organosilicon compound having curability and one or more of oxide fine particles of an element selected from the element group consisting of Si, Al, Sn, Sb, Ta, Ce, La, Fe, Zn, W, Zr, In, and Ti and/or one or more of oxide fine particles comprised of a composite oxide of two or more elements selected from the element groups is used.

In addition to the above components, the hard coat composition preferably includes at least any one of amines, amino acids, a metal acetylacetonate complex, organic acid metal salt, perchlorates, a salt of perchloric acids, acids, metal chloride, and a polyfunctional epoxy compound. A suitable solvent that does not affect the lens may be used for the hard coat composition, or no solvent may be used.

The hard coat layer is generally formed by applying the hard coat composition by a well-known coating method such as spin coating and dip coating and curing the hard coat composition. Examples of the curing method include heat curing and a curing method by energy ray irradiation such as an ultraviolet ray or visible light. In order to suppress the generation of interference fringes, it is preferable that the difference in refractive indexes of the hard coat layer and the lens is within a range of ±0.1.

The antireflection layer is generally comprised of the hard coat layer, if necessary. The antireflection layer includes an inorganic antireflection layer and an organic antireflection layer. In a case where the antireflection layer is inorganic, inorganic oxide such as SiO₂, and TiO₂ is used, and the antireflection layer is formed by a dry method such as a vacuum deposition method, a sputtering method, an ion plating method, an ion beam assist method, and a CVD method. In a case where the antireflection layer is organic, a composition containing an organosilicon compound and silica-based fine particles having an internal cavity is used, and the antireflection layer is formed by a wet method.

The antireflection layer has a single layer and a multiple layer. In the case where the antireflection layer is used as a single layer, it is preferable that the refractive index thereof is lower than that of the hard coat layer by at least equal to or greater than 0.1. In order to effectively exhibit an antireflection function, it is preferable to use a multilayer antireflection film. In that case, a low refractive index film and a high refractive index film are alternately laminated. In this case, a refractive index difference of the low refractive index film and the high refractive index film is preferably equal to or greater than 0.1. Examples of the high refractive index film include a film of ZnO, TiO₂, CeO₂, Sb₂O₅, SnO₂, ZrO₂, Ta₂O₅, and the like, and examples of the low refractive index film include a SiO₂ film.

An anti-fog layer, an antifouling layer, and a water repellent layer may be formed on the antireflection layer, if necessary. With respect to the method of forming an anti-fog layer, an antifouling layer, and a water repellent layer, as long as the method does not give an adverse effect on the antireflection function, the treatment method, the treatment material, and the like are not particularly limited. Well-known antifogging treatment methods, antifouling treatment methods, water repellent treatment methods, and materials can be used. Examples of the antifogging treatment method and the antifouling treatment method include a method of covering the surface with a surfactant, a method of adding a hydrophilic film to the surface so as to cause the surface to be water absorbent, a method of covering the surface with fine irregularities so as to increase water absorption, a method of causing the surface to be water absorbent by using photocatalytic activity, and a method of preventing adhesion of water droplets by applying a super water repellent treatment. Examples of the water repellent treatment method include a method of forming a water repellent treated layer by applying a fluorine-containing silane compound and the like by vapor deposition or sputtering and a method of dissolving a fluorine-containing silane compound in a solvent and performing coating to form a water repellent treated layer.

### [Plastic polarized lens]

The plastic polarized lens of the present embodiment includes a polarizing film and a substrate layer including a molded product obtained by curing a polymerizable composition for an optical material of the present embodiment formed on at least over surface of the polarizing film.

The polarizing film according to the present embodiment is comprised of a thermoplastic resin. Examples of the thermoplastic resin include thermoplastic polyester, thermoplastic polycarbonate, thermoplastic polyolefin, and thermoplastic polyimide. In view of water resistance, heat resistance, and form workability, thermoplastic polyester and thermoplastic polycarbonate are preferable, and thermoplastic polyester is more preferable.

Examples of the thermoplastic polyester include polyethylene terephthalate, polyethylene naphthalate, and polybutylene terephthalate. In view of water resistance, heat resistance, and form workability, polyethylene terephthalate is preferable.

Specific examples of the polarizing film include a thermoplastic polyester polarizing film containing a dichroic dye, a polyvinyl alcohol polarizing film containing iodine, and a polyvinyl alcohol polarizing film containing a dichroic dye.

The polarizing film is dried and stabilized, and thus may be used after a heating treatment is performed.

In order to improve the adhesiveness to the acrylic resin, the polarizing film may be used after one or more kinds of pretreatments selected from a primer coating treatment, a chemical treatment (a chemical treatment such as gas or alkali), a corona discharge treatment, a plasma treatment, an ultraviolet ray irradiation treatment, an electron beam irradiation treatment, a surface roughening treatment, a flame treatment, and the like may be performed. Among such pretreatments, one or more kinds selected from a primer coating treatment, a chemical treatment, a corona discharge treatment, and a plasma treatment are particularly preferable.

The plastic polarized lens of the present embodiment can be obtained by providing a substrate layer that can be obtained by curing the polymerizable composition for an optical material of the present embodiment, on at least one surface of the polarizing film.

The process of producing the plastic polarized lens is not particularly limited. However, preferable examples thereof include a cast polymerization method.

For example, the process of producing the plastic polarized lens of the present embodiment may include
fixing a polarizing film to a lens casting mold in a state of being separated from the mold;
injecting a polymerizable composition for an optical material to at least one of the cavities formed between the polarizing film and the mold; and
polymerizing and curing the polymerizable composition for an optical material to laminate a substrate layer over at least one surface of the polarizing film.

The lens casting mold generally includes two substantially disc-shaped glass molds held by a gasket. The polarizing film is mounted in the cavity of this lens casting mold so as to be parallel to the inner surface of the mold on the front side where the film surface faces. A cavity portion is formed between the polarizing film and the mold. The polarizing film may be shaped in advance.

The polymerization condition of the polymerizable composition for an optical material differs depending on the composition of the polymerizable composition, the types and the use amount of the catalyst, and the shape of the mold, but the polymerization is performed at the temperature of 5°C to 140°C for 1 to 50 hours. In some cases, it is preferable that the temperature is maintained or is gradually increased in a temperature range of 5°C to 130°C, and the polymerizable composition is cured for 1 to 25 hours.

The laminate cured by polymerization is released from the mold, so as to obtain a plastic polarized lens of the present embodiment.

According to the present embodiment, the laminate after polymerization and release may be subjected to a heating treatment such as annealing. With respect to the treatment temperature, in view of the effects of the present invention, the treatment is performed at 90°C to 150°C, is preferably performed at 110°C to 130°C, and more preferably performed at 115°C to 125°C. In view of the effect of the present invention, the treatment time is in the range of 1 to 10 hours and preferably 2 to 5 hours.

The coating layer which is the same as the plastic spectacle lens may be formed on the surface of the obtained substrate layer.

### Examples

Subsequently, the present invention is specifically described with reference to the examples. However, the present invention is not limited to the examples. With respect to the examples and the comparative examples, methods and devices used in evaluations are as follows.

Hereinafter, the present invention is specifically described with reference to examples.

In the performance test of the resin, transparency, refractive index, an Abbe number, tones (a*,b*), and light control performance were evaluated by the following method.
- Transparency: Irradiation was performed on the obtained resin molded product using the projector in a dark place, and whether there are cloudiness, an opaque material, and elution of an adhesive component from a tape was visually determined. A case where cloudiness, an opaque material, and elution from a tape were not found is referred to as "transparent" and a case where cloudiness, an opaque material, and elution from a tape were found is referred to as "not transparent".
- Refractive index (ne) Abbe number (ve): Measurement was performed at 20°C by using a Pulfrich refractometer
- Color (a*, b*) : a* and b* in the L*a*b* color system (CIE 1976) were measured by using a spectrocolorimeter CM-5 manufactured by Konica Minolta, Inc.
- Light control performance: An instantaneous multi-metering system MSPD-7700 manufacture Otsuka Electronics Co., Ltd. equipped with an excitation light source xenon lamp MS-35AAA/FB2000-O manufactured by USHIO Inc. was used, a molded product sample processed to having a thickness of 2 mm was irradiated with excitation light for 15 minutes under the conditions of the temperature of 23°C and the illuminance of 50,000 lux, and the difference (Δ%T) in the luminous transmittance before and after the color development was obtained. As the change amount is larger, the light control performance was higher.

### [Example 1]

0.10 parts by weight of triphenyl phosphite as phosphite triester, 0.05 parts by weight of JP-504 manufactured by Johoku Chemical Co., Ltd. as acidic phosphate ester, 2.0 parts by weight of ADEKA PLURONIC L-64 manufactured by Adeka Corporation, 0.0745 parts by weight of ReversacolWembley Grey manufactured by Vivimed Labs Ltd. and 0.061 parts by weight of Reversacol Heath Green manufactured by Vivimed Labs Ltd. as the photochromic compound, and 0.10 parts by weight of HOSTAVIN PR-25 as the ultraviolet absorbing agent were added to 49.6 parts by weight of m-xylylene diisocyanate, stirred, and dissolved. 48.2 parts by weight of a composition including 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane were added to the mixture liquid, and stirred, and 0.008 parts by weight of dimethyltin dichloride was added and uniformly dissolved. Thereafter, degassing was performed with a vacuum pump, and this solution was cast into a glass mold. This was polymerized in the range of 15°C to 120°C for 24 hours, and the mold was removed to extract a molded product.

The molded product was colorless and transparent and had a good light control performance of being immediately colored in a case of being put placed under sunlight and being decolored in a case where light rays were shielded. Evaluation results of the obtained molded product are presented in Table-1.

### [Example 2]

The same method as in Example 1 was performed except that the addition amount of triphenyl phosphite was changed from 0.10 parts by weight to 0.20 parts by weight. Evaluation results are presented in Table-1.

### [Example 3]

The same method as in Example 1 was performed except that the manufacturing lot of m-xylylene diisocyanate was changed. Evaluation results are presented in Table-1.

### [Example 4]

The same method as in Example 1 was performed except that the acidic phosphate ester was changed from JP-504 manufactured by Johoku Chemical Co., Ltd. to JP-506H manufactured by Johoku Chemical Co., Ltd., and the addition amount was 0.30 parts by weight. Evaluation results are presented in Table-1.

### [Example 5]

The same method as in Example 4 was performed except that the addition amount of Adeka Pluronic L-64 manufactured by Adeka Corporation was 1.9 parts by weight, the monomer (component E) was changed to 49.8 parts by weight of a composition including 2,5-bis(isocyanatomethyl)bicyclo-[2.2.1]-heptane and 2,6-bis(isocyanatomethyl)bicyclo-[2.2.1]-heptane, and the monomer (component F) was changed to 23.4 parts by weight of pentaerythritol tetrakis(3-mercaptopropionate) and 24.9 parts by weight of 4-mercaptomethyl-1,8-dimercapto-3,6-dithiaoctane. Evaluation results are presented in Table-1.

### [Example 6]

After 9.7 parts by weight of m-xylylene diisocyanate and 0.10 parts by weight of triphenyl phosphite as the phosphite triester were mixed to obtain a homogeneous solution, and 0.0745 parts by weight of Reversacol Wembley Grey manufactured by Vivimed Labs Ltd. and 0.061 parts by weight of Reversacol Heath Green manufactured by Vivimed Labs Ltd., as the photochromic compound, and 0.10 parts by weight of HOSTAVIN PR-25 as the UV absorbing agent were mixed to prepare a master batch. The master batch was mixed with 39.9 parts by weight of m-xylylene diisocyanate, 0.30 parts by weight of JP-506H manufactured by Johoku Chemical Co., Ltd. as the acidic phosphate ester, and 2.0 parts by weight of ADEKA PLURONIC L-64 manufactured by Adeka Corporation, and dissolved by stirring. After 48.2 parts by weight of a composition including 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane was added to this mixture solution and stirred, and 0.008 parts by weight of dimethyltin dichloride was added and evenly dissolved. Thereafter, degassing was performed with a vacuum pump, and this solution was cast into a glass mold. This was polymerized in the range of 15°C to 120°C for 24 hours, and the mold was removed to extract a molded product.

The molded product was colorless and transparent, and had a light control performance of being immediately colored in a case of being put placed under sunlight and being decolored in a case where light rays were shielded. Evaluation results of the obtained molded product are presented in Table-1.

### [Comparative Example 1]

The same method as in Example 1 was performed except that triphenyl phosphite was not added. Evaluation results are presented in Table-1.

### [Comparative Example 2]

The same method as in Comparative Example 1 was performed except that the manufacturing lot of m-xylylene diisocyanate was changed. Evaluation results are presented in Table-1.

### [Comparative Examples 3 to 5]

The same method as in Example 1 was performed except that triphenyl phosphite was changed to 3,5-di-tert-butyl-4-hydroxytoluene, phenol, and p-toluenesulfonamide. Evaluation results are presented in Table-1.

**[Table-1]**

| | A component (ppm) | B component (ppm) | C component (parts by weight) | D component (ppm) | E component weight) | F component (parts by weight) | Transparency | Optical properties | | Initial color | | Light control performance |
|---|---|---|---|---|---|---|---|---|---|---|---|---|
| | | | | | | | | Reflectivity ne | Abbe number νe | a* | b* | 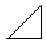 %T |
| Example 1 | A1 (1000) | B1 (500) | C1 (2.0) | D1 (745) | E1 [Lot.A] (49.6) | F1 (48.2) | Transparent | 1.66 | 32 | -1.9 | 3.7 | 66 |
| | | | | D2 (610) | | | | | | | | |
| Example 2 | A1 (2000) | B1 (500) | C1 (2.0) | D1 (745) | E1 [Lot.A] (49.6) | F1 (48.2) | Transparent | 1.66 | 32 | -1.9 | 3.5 | 64 |
| | | | | D2 (610) | | | | | | | | |
| Example 3 | A1 (1000) | B1 (500) | C1 (2.0) | D1 (745) | E1 [Lot.B] (49.6) | F1 (48.2) | Transparent | 1.66 | 32 | -1.9 | 3.6 | 66 |
| | | | | D2 (610) | | | | | | | | |
| Example 4 | A1 (1000) | B2 (3000) | C1 (2.0) | D1 (745) | E1 [Lot.A] (49.6) | F1 (48.2) | Transparent | 1.66 | 32 | -1.9 | 3.6 | 66 |
| | | | | D2 (610) | | | | | | | | |
| Example 5 | A1 (1000) | B2 (3000) | C1 (1.9) | D1 (745) | E2 (49.8) | F2 (23.4) | Transparent | 1.60 | 40 | -2.5 | 4.7 | 66 |
| | | | | D2 (610) | | F3 (24.9) | | | | | | |
| Example 6 | A1 (1000) | B2 (3000) | C1 (2.0) | D1 (745) | E1 [Lot.A] (49.6) | F1 (48.2) | Transparent | 1.66 | 32 | -2.0 | 3.6 | 66 |
| | | | | D2 (610) | | | | | | | | |
| Comparative Example 1 | - | B1 (500) | C1 (2.0) | D1 (745) | E1 [Lot.A] (49.6) | F1 (48.2) | Transparent | 1.66 | 32 | -1.5 | 4.8 | 65 |
| | | | | D2 (610) | | | | | | | | |
| Comparative Example 2 | - | B1 (500) | C1 (2.0) | D1 (745) | E1 [Lot.B] (49.6) | F1 (48.2) | Transparent | 1.66 | 32 | 0.3 | 5.6 | 64 |
| | | | | D2 (610) | | | | | | | | |
| Comparative Example 3 | A2 (1000) | B1 (500) | C1 (2.0) | D1 (745) | E1 [Lot.A] (49.6) | F1 (48.2) | Transparent | 1.66 | 32 | -1.5 | 4.1 | 66 |
| | | | | D2 (610) | | | | | | | | |
| Comparative Example 4 | A3 (1000) | B1 (500) | C1 (2.0) | D1 (745) | E1 [Lot.A] (49.6) | F1 (48.2) | Transparent | 1.66 | 32 | -0.5 | 4.9 | 65 |
| | | | | D2 (610) | | | | | | | | |
| Comparative Example 5 | A4 (1000) | B1 (500) | C1 (2.0) | D1 (745) | E1 [Lot.A] (49.6) | F1 (48.2) | Transparent | 1.66 | 32 | -1.3 | 4.1 | 65 |
| | | | | D2 (610) | | | | | | | | |

The compounds listed in Table-1 are as follows.
- A1: Triphenyl phosphite
- A2: 3,5-Di-tert-butyl-4-hydroxytoluene
- A3: Phenol
- A4: p-Toluenesulfonamide
- B1: JP-504 manufactured by Johoku Chemical Co., Ltd. (In Formula (2), m: 1 or 2, n: 0, and R⁴: C4 alkyl group)
- B2: JP-506H manufactured by Johoku Chemical Co., Ltd. (In Formula (2), m: 1 or 2, n: 1, R⁴: C4 alkyl group, and R⁵ and R⁶: hydrogen atom)
- C1: ADEKA PLURONIC L-64 (polyoxyethylene-polyoxypropylene block copolymer) manufactured by Adeka Corporation
- D1: Reversacol Wembley Grey (polyoxyalkylene chain, naphthopyran-based chromophore (Formula (c))) by Vivimed Labs Ltd.
- D2: Reversacol Heath Green (polyoxyalkylene chain, naphthopyran-based chromophore (Formula (c))) manufactured by Vivimed Labs Ltd.
- D3: Reversacol Cayenne Red (polyoxyalkylene chain, naphthopyran-based chromophore (Formula (c))) manufactured by Vivimed Labs Ltd.
- E1: m-xylylene diisocyanate
- E2: Composition including 2,5-bis(isocyanatomethyl)bicyclo-[2.2.1]-heptane and 2,6-bis(isocyanatomethyl)bicyclo-[2.2.1]-heptane
- F1: Composition including 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane
- F2: Pentaerythritol tetrakis(3-mercaptopropionate)
- F3: 4-Mercaptomethyl-1,8-dimercapto-3,6-dithiaoctane

From the comparison of Example 1 with Comparative Examples 1 and 3 to 5, in a case where triphenyl phosphite, which is the phosphite triester (A) was used, and the a* of the obtained molded product was reduced, and redness of the initial color was suppressed. In Comparative Examples 1 and 2, the redness a* of the initial color of the obtained molded product varied depending on the quality of the E component, but in Examples 1 and 3, even in a case where the quality of the E component was different, the initial color was stable by using triphenyl phosphite and was excellent. Even in a case where triphenyl phosphite was used, an effect on the light control performance was not observed.

### [Example 7]

9.235 parts by weight of m-xylylene diisocyanate, 0.765 parts by weight of a composition including 2,5-bis(isocyanatomethyl)bicyclo-[2.2.1]-heptane and 2,6-bis(isocyanatomethyl)bicyclo-[2.2.1]-heptane, 0.010 parts by weight of triphenyl phosphite as the phosphite triester were mixed to obtain a homogeneous solution, 0.0820 parts by weight of Reversacol Wembley Grey manufactured by Vivimed Labs Ltd. and 0.067 parts by weight of Reversacol Heath Green manufactured by Vivimed Labs Ltd. as the photochromic compound, and 0.10 parts by weight of HOSTAVIN PR-25 as the ultraviolet absorbing agent were mixed to prepare a master batch. The master batch was mixed with 41.685 parts by weight of m-xylylene diisocyanate, 0.20 part by weight of JP-506H manufactured by Johoku Chemical Co., Ltd. and 2.0 parts by weight of CAPA2302A manufactured by Perstorp Holding AB as the acidic phosphate ester were mixed and dissolved by stirring. 49.01 parts by weight of a composition including 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane was added to this mixture solution and stirred, and 0.005 parts by weight of dimethyltin dichloride was added and evenly dissolved. Thereafter, degassing was performed with a vacuum pump, and this solution was cast into a glass mold. This was polymerized in the range of 15°C to 120°C for 48 hours, and the mold was removed to extract a molded product.

The molded product was colorless and transparent, and had a light control performance of being immediately colored in a case of being put placed under sunlight and being decolored in a case where light rays were shielded. The evaluation results of the obtained molded products are presented in Table-2.

### [Example 8]

The same method as in Example 7 was performed except that the addition amount of triphenyl phosphite was changed from 0.010 parts by weight to 0.050 parts by weight. Evaluation results are presented in Table-2.

### [Example 9]

The same method as in Example 7 was performed except that the addition amount of triphenyl phosphite was changed from 0.010 parts by weight to 0.10 parts by weight. Evaluation results are presented in Table-2.

### [Example 10]

The same method as in Example 7 was performed except that the addition amount of triphenyl phosphite was changed from 0.10 parts by weight to 0.30 parts by weight. Evaluation results are presented in Table-2.

### [Example 11]

The same method as in Example 7 was performed except that the addition amount of triphenyl phosphite was changed from 0.10 parts by weight to 0.50 parts by weight. Evaluation results are presented in Table-2.

**[Table 2]**

| | A component (ppm) | B component (ppm) | C component (parts by weight) | D component (ppm) | E component (parts by weight) | | F component (parts by weight) | Transparency | Optical properties | | Initial color | | Light control performance |
|---|---|---|---|---|---|---|---|---|---|---|---|---|---|
| | | | | | | | | | Reflectivity ne | Abbe number νe | a* | b* | 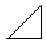 %T |
| Example 7 | A1 (100) | B1 (2000) | C2 (2.0) | D1 (820) | E1 [Lot.C] (50.92) | E2 (0.765) | F1 (49.01) | Transparent | 1.66 | 32 | -1.0 | 2.2 | 64 |
| | | | | D2 (670) | | | | | | | | | |
| Example 8 | A1 (500) | B1 (2000) | C2 (2.0) | D1 (820) | E1 [Lot.C] (50.92) | E2 (0.765) | F1 (49.01) | Transparent | 1.66 | 32 | -1.1 | 2.1 | 63 |
| | | | | D2 (670) | | | | | | | | | |
| Example 9 | A1 (1000) | B1 (2000) | C2 (2.0) | D1 (820) | E1 [Lot.C] (50.92) | E2 (0.765) | F1 (49.01) | Transparent | 1.66 | 32 | -1.0 | 2.1 | 63 |
| | | | | D2 (670) | | | | | | | | | |
| Example 10 | A1 (3000) | B1 (2000) | C2 (2.0) | D1 (820) | E1 [Lot.C] (50.92) | E2 (0.765) | F1 (49.01) | Transparent | 1.66 | 32 | -0.9 | 1.9 | 63 |
| | | | | D2 (670) | | | | | | | | | |
| Example 11 | A1 (5000) | B1 (2000) | C2 (2.0) | D1 (820) | E1 [Lot.C] (50.92) | E2 (0.765) | F1 (49.01) | Transparent | 1.66 | 32 | -0.7 | 1.7 | 62 |
| | | | | D2 (670) | | | | | | | | | |

| | | | | | | | | | | | | | |
|---|---|---|---|---|---|---|---|---|---|---|---|---|---|
| In the E component, E2 is a component included in the master batch. | | | | | | | | | | | | | |

Except for the following compounds, the compounds listed in Table-2 are as described above.
C2: Caprolactone, 1,4-butanediol polyester (Trade name: CAPA 2302A, manufactured by Perstorp Holding AB)

From the comparison of Examples 7 to 11, in a case where triphenyl phosphite which is the phosphite triester (A) was included in the range of 100 ppm to 5,000 ppm, the a* of the obtained molded product is low, and the redness of the initial color was suppressed. As a result, an influence on the light control performance was not observed.

From the above results, it was clearly understood that, according to the present invention using the phosphite triester (A), regardless of the quality of the polyisocyanate compound, it is possible to provide a photochromic lens in which a good initial color was able to be stably obtained, and the light control performance was also excellent.

This application is based on Japanese patent application NOS. 2017-130119 filed on July 3, 2017 and 2018-100565 filed on May 25, 2018, the content of which is incorporated hereinto by reference.

## Claims

1. A polymerizable composition for an optical material comprising:
(A) phosphite triester represented by Formula (1); 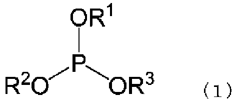 wherein, in Formula (1), R¹, R², and R³ each represent an aliphatic or aromatic hydrocarbon group having 1 to 18 carbon atoms which optionally include a hetero atom, R¹, R², and R³ may be identical to or different from each other, and R¹, R², and R³ can be bonded to each other to form a ring structure that optionally include a hetero atom,
(D) a photochromic compound,
(E) a polyisocyanate compound, and
(F) a difunctional or higher functional active hydrogen compound.

2. The polymerizable composition for an optical material according to claim 1, further comprising:
(C) at least one kind of alcohol compound selected from a compound represented by Formula (3a) and a compound represented by Formula (3b), 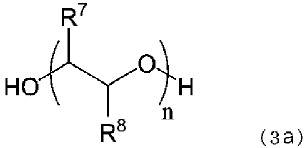 wherein, in Formula (3a), R⁷ and R⁸ each represent a hydrogen atom, a methyl group, and an ethyl group, and at least one thereof is a hydrogen atom, R⁷ and R⁸ may be identical to or different from each other, and n represents an integer of 30 to 500, 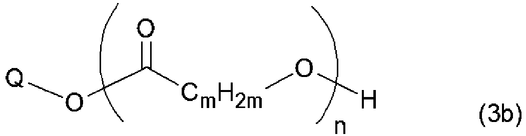 wherein, in Formula (3b), Q represents a divalent group derived from diol, or a trivalent to 30-valent group derived from polyol having at least three primary alcohol groups, and m represents an integer of 3 to 10, and n represents an integer of 2 to 30.

3. The polymerizable composition for an optical material according to claim 1 or 2, further comprising:
(B) acidic phosphate ester represented by Formula (2). 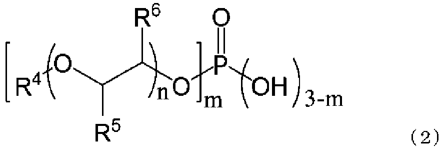 wherein, in Formula (2), m represents an integer of 1 or 2, n represents an integer of 0 to 18, R⁴ represents an alkyl group having 1 to 20 carbon atoms, R⁵ and R⁶ each independently represent a hydrogen atom, a methyl group, or an ethyl group.

4. The polymerizable composition for an optical material according to any one of claims 1 to 3,
wherein a content of the phosphite triester (A) is 0.01 % by weight to 0.5 % by weight with respect to 100 % by weight of the polymerizable composition for an optical material.

5. The polymerizable composition for an optical material according to any one of claims 1 to 4,
wherein the phosphite triester (A) is a compound including an aromatic ring.

6. The polymerizable composition for an optical material according to any one of claims 1 to 5,
wherein the phosphite triester (A) is at least one selected from triphenyl phosphite, trisnonylphenyl phosphite, tricresyl phosphite, diphenyl(2-ethylhexyl)phosphite, diphenylisodecyl phosphite, diphenyltridecyl phosphite, tetraphenyl dipropylene glycol diphosphite, and tris(2,4-dibutylphenyl) phosphite.

7. The polymerizable composition for an optical material according to any one of claims 1 to 6,
wherein the phosphite triester (A) is triphenyl phosphite.

8. The polymerizable composition for an optical material according to claim 3,
wherein in the acidic phosphate ester (B), n represents an integer of 4 or less, and R⁴ represents an alkyl group having 1 to 12 carbon atoms.

9. The polymerizable composition for an optical material according to claim 2,
wherein the alcohol compound (C) is a compound represented by Formula (4a). 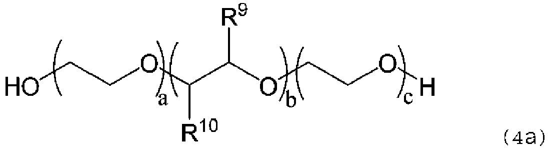 wherein, in Formula (4a), R⁹ and R¹⁰ each represent a hydrogen atom, a methyl group, and an ethyl group, and at least one thereof is a hydrogen atom, R⁹ and R¹⁰ may be identical to or different from each other, and sum of a and c is an integer of 2 to 400, and b is an integer of 1 to 100.

10. The polymerizable composition for an optical material according to claim 9,
wherein a number average molecular weight of the alcohol compound (C) is 1,000 to 15,000.

11. The polymerizable composition for an optical material according to claim 9 or 10,
wherein a number average molecular weight of the alcohol compound (C) is 1,500 to 7,500.

12. The polymerizable composition for an optical material according to any one of claims 1 to 11,
wherein the photochromic compound (D) is at least one selected from compounds represented by Formulae (5) and (6). 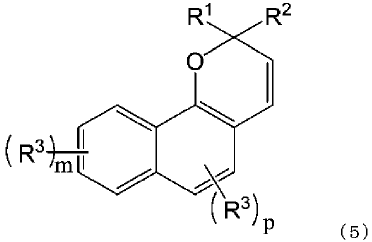 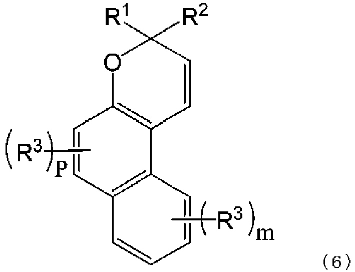 wherein, in Formulae (5) and (6), R¹ and R² may be identical to or different from each other, and each represent:
hydrogen;
a linear or branched alkyl group having 1 to 12 carbon atoms;
a cycloalkyl group having 3 to 12 carbon atoms;
an aryl group having 6 to 24 carbon atoms or a heteroaryl group having 4 to 24 carbon atoms, which is substituted or unsubstituted; and
an aralkyl or heteroaralkyl group (a linear or branched alkyl group having 1 to 4 carbon atoms is substituted with the aryl group or heteroaryl group),
the substituent of the substituted aryl group having 6 to 24 carbon atoms or the substituted heteroaryl group having 4 to 24 carbon atoms is at least one selected from a halogen atom, a hydroxy group, a linear or branched alkyl group having 1 to 12 carbon atoms, a linear or branched alkoxy group having 1 to 12 carbon atoms, a linear or branched haloalkyl group having 1 to 12 carbon atoms which is substituted with at least one halogen atom, a linear or branched haloalkoxy group having 1 to 12 carbon atoms, which is substituted with at least one halogen atom, a phenoxy group or a naphthoxy group which is substituted with at least one linear or branched alkyl group or alkoxy group having 1 to 12 carbon atoms, a linear or branched alkenyl group having 2 to 12 carbon atoms, a -NH₂ group, a -NHR group, a -N(R)₂ group (R represents a linear or branched alkyl group having 1 to 6 carbon atoms, and in a case where there are two R's, the two R's may be identical to or different from each other), a methacryloyl group, or an acryloyl group,
R³'s may be identical to or different from each other, and independently represent a halogen atom;
a linear or branched alkyl group having 1 to 12 carbon atoms;
a cycloalkyl group having 3 to 12 carbon atoms;
a linear or branched alkoxy group having 1 to 12 carbon atoms;
a linear or branched haloalkyl group having 1 to 12 carbon atoms substituted with at least one halogen atom, a halocycloalkyl group having 3 to 12 carbon atoms substituted with at least one halogen atom, and a linear or branched haloalkoxy group having 1 to 12 carbon atoms substituted with at least one halogen atom;
an aryl group having 6 to 24 carbon atoms or a heteroaryl group having 4 to 24 carbon atoms, which is substituted or unsubstituted (as a substituent, having at least one substituent selected from a halogen atom, a hydroxy group, a linear or branched alkyl group having 1 to 12 carbon atoms, a linear or branched alkoxy group having 1 to 12 carbon atoms, a linear or branched haloalkyl group having 1 to 12 carbon atoms which is substituted with at least one halogen atom, a linear or branched haloalkoxy group having 1 to 12 carbon atoms, which is substituted with at least one halogen atom, a phenoxy group or a naphthoxy group which is substituted with at least one linear or branched alkyl group or alkoxy group having 1 to 12 carbon atoms, a linear or branched alkenyl group having 2 to 12 carbon atoms, and an amino group);
an aralkyl or heteroaralkyl group (a linear or branched alkyl group having 1 to 4 carbon atoms is substituted with the aryl group or heteroaryl group);
a substituted or unsubstituted phenoxy or naphthoxy group (as a substituent, having at least one substituent selected from a linear or branched alkyl group or alkoxy group having 1 to 6 carbon atoms);
-NH₂; -NHR; -CONH₂; or
-CONHR
(R is a linear or branched alkyl group having 1 to 6 carbon atoms); and
-OCOR or -COOR (here, R is a linear or branched alkyl group having 1 to 6 carbon atoms, a cycloalkyl group having 3 to 6 carbon atoms, or a phenyl group substituted with at least one substituent of a substituted aryl or substituted heteroaryl group described in R¹ and R² or an unsubstituted phenyl group),
at least two adjacent R³'s may be bonded to each other and form one or more aromatic or non-aromatic ring groups including carbon atoms to which R³ are bonded, the aromatic or non-aromatic ring groups includes one ring or two annelated rings that optionally include a hetero atom selected from the group consisting of oxygen, sulfur, and nitrogen,
m is an integer of 0 to 4, and p is an integer of 0 to 2.

13. The polymerizable composition for an optical material according to any one of claims 1 to 12,
wherein the photochromic compound (D) is a compound represented by Formula (7); 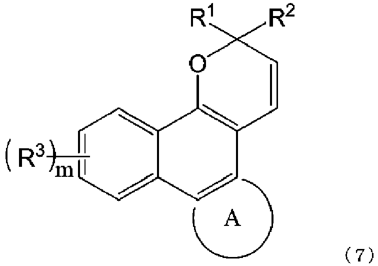 wherein, in Formula (7), R¹, R², R³, and m are the same as those in Formula (5), and A represents an annelated ring of Formulae (A1) to (A5); 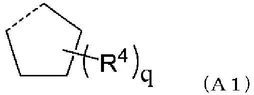 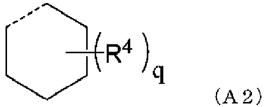 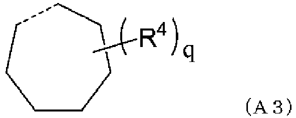 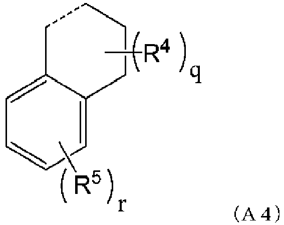 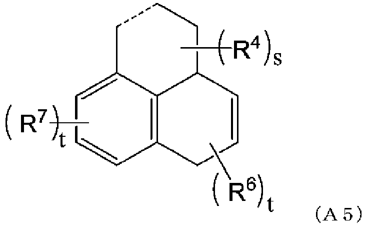
wherein, in these annelated rings (A1) to (A5), dotted lines represent a bond between a carbon C5 and a carbon C6 in a naphthopyran ring of Formula (7), the α bond of the annelated ring (A4) or (A5) is bonded to the carbon C5 or the carbon C6 in the naphthopyran ring of Formula (7),
R⁴'s may be identical to or different from each other, and independently represent OH, or a linear or branched alkyl group or alkoxy group having 1 to 6 carbon atoms, or two R⁴'s form carbonyl (CO),
R⁵, R⁶ and R⁷ are independently a halogen atom;
a linear or branched alkyl group having 1 to 12 carbon atoms;
a linear or branched haloalkyl group having 1 to 6 carbon atoms substituted by at least one halogen atom;
a cycloalkyl group having 3 to 12 carbon atoms;
a linear or branched alkoxy group having 1 to 6 carbon atoms;
a substituted or unsubstituted phenyl or benzyl group (as a substituent, having at least one of the substituents exemplified above in the definition of the R¹ and R² groups, in a case where the R¹ and R² groups of Formula (7) independently correspond to aryl or heteroaryl groups);
-NH₂; and
-NHR (here, R is a linear or branched alkyl group having 1 to 6 carbon atoms);
a substituted or unsubstituted phenoxy or naphthoxy group (as a substituent, having a linear or branched alkyl group or alkoxy group having at least 1 to 6 carbon atoms); and
-COR;
-COOR; or
-CONHR (here, R represents a linear or branched alkyl group having 1 to 6 carbon atoms, a cycloalkyl group having 3 to 6 carbon atoms, or a substituted or unsubstituted phenyl or benzyl group (as a substituent, having at least one of the substituents exemplified above in the definition of the R¹ and R² groups, in a case where the R¹ and R² groups Formula (7) of independently correspond to aryl or heteroaryl groups))
q is an integer of 0 to 6, r is an integer of 0 to 4, s is an integer of 0 to 2, and t is an integer of 0 to 3, and
in a case where A represents (A4), q is an integer of 0 to 2, r is an integer of 0 to 4, and in a case where A represents (A2), and q is an integer of 0 to 2.

14. The polymerizable composition for an optical material according to any one of claims 1 to 13,
wherein the photochromic compound (D) is a compound represented by Formula (a) or (b);
PC-L-Chain (a)
PC-L-Chain-L'-PC' (b)
wherein PC and PC' represent any one of Formulae (c) to (f), and PC and PC' may be identical to or different from each other, 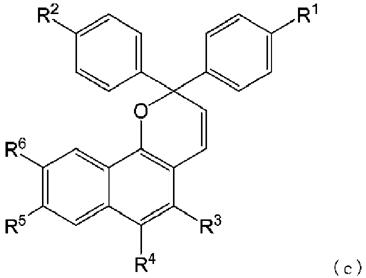 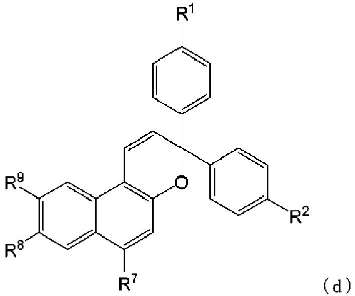 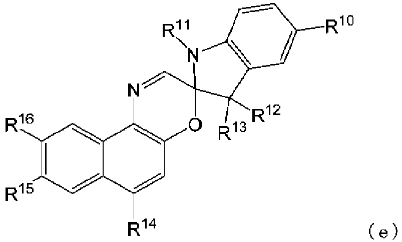 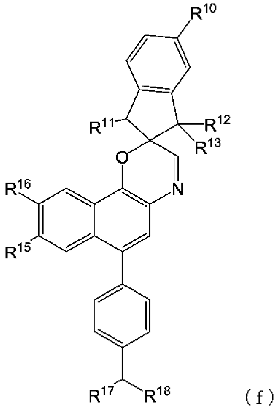 wherein, in Formulae (c) to (f), R¹ to R¹⁸ each represent hydrogen, a halogen atom, a carboxyl group, an acetyl group, a formyl group, a C1 to C20 aliphatic group which optionally be substituted, a C3 to C20 alicyclic group which optionally be substituted, or a C6 to C20 aromatic organic group which optionally be substituted, and may be identical to or different from each other, the aliphatic group, the alicyclic group, or the aromatic organic group may include an oxygen atom or a nitrogen atom, any one group included in the compounds represented by the Formulae (c) to (f) is bonded to L or L' which is a divalent organic group, L and L' each represent a divalent organic group including at least one group selected from an oxyethylene chain, an oxypropylene chain, a (thio) ester group, and a (thio) amide group, and chain represents a monovalent or divalent organic group including at least one group selected from a polysiloxane chain and a polyoxyalkylene chain.

15. The polymerizable composition for an optical material according to any one of claims 1 to 14,
wherein the polyisocyanate compound (E) is at least one selected from hexamethylene diisocyanate, pentamethylene diisocyanate, m-xylylene diisocyanate, p-xylylene diisocyanate, isophorone diisocyanate, bis(isocyanatomethyl) cyclohexane, dicyclohexylmethane diisocyanate, 2,5-bis(isocyanatomethyl)bicyclo-[2.2.1]-heptane, 2,6-bis(isocyanatomethyl)bicyclo-[2.2.1]-heptane, tolylene diisocyanate, phenylene diisocyanate, and diphenylmethane diisocyanate.

16. The polymerizable composition for an optical material according to according to any one of claims 1 to 15,
wherein the active hydrogen compound (F) is at least one selected from a polyol compound, a polythiol compound, and a thiol compound having a hydroxy group.

17. The polymerizable composition for an optical material according to any one of claims 1 to 16,
wherein the active hydrogen compound (F) is a trifunctional or higher functional active hydrogen compound.

18. The polymerizable composition for an optical material according to any one of claims 1 to 17,
wherein the active hydrogen compound (F) is at least one selected from glycerin, pentaerythritol tetrakis(2-mercaptoacetate), pentaerythritol tetrakis(3-mercaptopropionate), 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 1,1,3,3-tetrakis(mercaptomethylthio) propane, and trimethylolpropane tris(3-mercaptopropionate).

19. A molded product comprised of a cured product of the polymerizable composition for an optical material according to any one of claims 1 to 18.

20. An optical material comprised of the molded product according to claim 19.

21. A plastic lens comprised of the molded product according to claim 19.

22. A plastic polarized lens comprising:
a polarizing film; and
a substrate layer comprised of the molded product according to claim 19, which is formed on at least over surface of the polarizing film.

23. A master batch for the polymerizable composition for an optical material according to any one of claims 1 to 18, comprising:
a phosphite triester (A);
a photochromic compound (D); and
a polyisocyanate compound (E).

24. The master batch according to claim 23, comprising:
0.1 % by weight to 2 % by weight of the phosphite triester (A) .

25. A process of producing the master batch for the polymerizable composition for an optical material according claim 23 or 24, comprising:
mixing a phosphite triester (A) and a polyisocyanate compound (E), and
mixing a photochromic compound (D) with the mixture liquid obtained in the above step.

26. A process of producing a polymerizable composition for an optical material, comprising:
mixing
(A) phosphite triester represented by Formula (1), 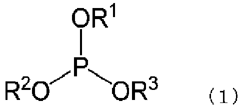 wherein, in Formula (1), R¹, R², and R³ each represent an aliphatic or aromatic hydrocarbon group having 1 to 18 carbon atoms which optionally include a hetero atom, R¹, R², and R³ may be identical to or different from each other, and R¹, R², and R³ can be bonded to each other to form a ring structure that optionally include a hetero atom,
(D) a photochromic compound,
(E) a polyisocyanate compound, and
(F) a difunctional or higher functional active hydrogen compound.

27. The process of producing a polymerizable composition for an optical material according to claim 26,
wherein the mixing components of (A), (D), (E), and (F) includes
preparing a master batch by the process according to claim 25; and
mixing the remaining component of (E) constituting a polymerizable composition for an optical material and the active hydrogen compound (F) with the master batch.

28. The process of producing a polymerizable composition for an optical material according to claim 26 or 27,
wherein the mixing components of (A), (D), (E), and (F) (here, excluding an alcohol compound represented by Formulae (3a) and (3b)) includes
mixing (C) at least one kind of alcohol compound selected from a compound represented by Formula (3a) and a compound represented by Formula (3b), 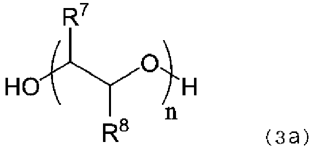 wherein, in Formula (3a), R⁷ and R⁸ each represent a hydrogen atom, a methyl group, and an ethyl group, and at least one thereof is a hydrogen atom, R⁷ and R⁸ may be identical to or different from each other, and n represents an integer of 30 to 500, 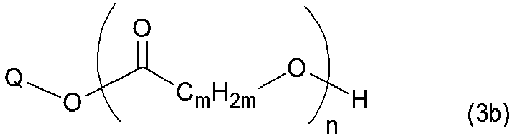 wherein, in Formula (3b), Q represents a divalent group derived from diol, or a trivalent to 30-valent group derived from polyol having at least three primary alcohol groups, and n represents an integer of 2 to 30.

29. The process of producing a polymerizable composition for an optical material according to any one of claims 26 to 28,
wherein the mixing components of (A), (D), (E), and (F) includes
mixing (B) acidic phosphate ester represented by Formula (2). 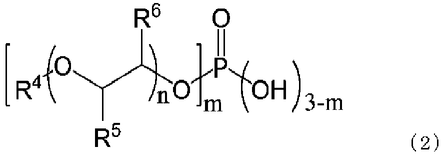 wherein, in Formula (2), m represents an integer of 1 or 2, n represents an integer of 0 to 18, R⁴ represents an alkyl group having 1 to 20 carbon atoms, R⁵ and R⁶ each independently represent a hydrogen atom, a methyl group, or an ethyl group.

30. A process of producing a plastic lens, comprising:
preparing a polymerizable composition for an optical material by the process according to any one of claims 26 to 29; and
performing cast polymerization on the polymerizable composition for an optical material in a mold to form a lens substrate.

31. A process of producing a plastic polarized lens, comprising:
preparing a polymerizable composition for an optical material by the process according to any one of claims 26 to 29;
fixing a polarizing film to a lens casting mold in a state of being separated from the mold;
injecting a polymerizable composition for an optical material to at least one of the cavities formed between the polarizing film and the mold; and
polymerizing and curing the polymerizable composition for an optical material to laminate a substrate layer over at least one surface of the polarizing film.
